(19) Europäisches Patentamt
European Patent Office
Office européen des brevets

(11) **EP 2 458 775 A1**

(12) **EUROPÄISCHE PATENTANMELDUNG**

(43) Veröffentlichungstag:
**30.05.2012 Patentblatt 2012/22**

(51) Int Cl.:
***H04L 9/06*** *(2006.01)*

(21) Anmeldenummer: **11009226.9**

(22) Anmeldetag: **22.11.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **24.11.2010  DE 102010052402**

(71) Anmelder: **Giesecke & Devrient GmbH
81677 München (DE)**

(72) Erfinder:
 • **Hemme, Ludger
  80809 München (DE)**
 • **Hoffmann, Lars, Dr.
  80639 München (DE)**

(54) **Kryptographische Hashfunktion**

(57)     In einem Verfahren zum Prüfen einer Implementierung einer kryptographischen Funktion auf einem portablen Datenträger (10) auf Sicherheit gegenüber einem Fehlerangriff wird in einer kryptographischen Funktion ein Kompressionswert (YA, YB, YC, YD, YE) ausgehend von einem Vorwert (A0, B0, C0, D0, E0) und einem Eingabewert berechnet. Dabei wird eine Kompressionsfunktion angewendet. Ein Prüfen der Implementierung der kryptographischen Funktion umfasst die folgenden Schritte: Erst wird eine Berechnung der kryptographischen Funktion gestört (S1; T1; T5). Dann wird die Ausgabe des Datenträgers (10) bei gestörter Berechnung analysiert (S3; T2, T3; T4; T6; T7; T8). Die kryptographische Funktion umfasst ein abschließendes Verknüpfen des Vorwerts (A0, B0, C0, D0, E0) mit dem Ergebnis (A80, B80, C80, D80, E80) der Anwendung der verkürzten Kompressionsfunktion. Der Fehlerangriff wird auf die Kompressionsfunktion als Teil der kryptographischen Funktion durchgeführt. Zum Schützen der Implementierung der kryptographischen Funktion auf den Datenträger (10) werden vorgegebene Anteile der Berechnung des Kompressionswertes redundant durchgeführt.

FIG 4

EP 2 458 775 A1

**Beschreibung**

Die vorliegende Erfindung betrifft ein Verfahren zum Prüfen einer Implementierung einer kryptographischen Funktion auf einem portablen Datenträger auf Sicherheit gegen Fehlerangriffe sowie ein Verfahren zum Schützen der entsprechenden Implementierung gegenüber Fehlerangriffen.

Kryptographische Funktionen werden auf einem portablen Datenträger, beispielsweise einer Chipkarte, vielfach im Rahmen von sicherheitsrelevanten Funktionalitäten des Datenträgers, beispielsweise Authentisierungsverfahren, Bezahl-Anwendungen und dergleichen, verwendet. Seit einiger Zeit sind verschiedene so genannte Fehlerangriffe auf portable Datenträger bekannt. Ein solcher Fehlerangriff wird dadurch durchgeführt, dass durch externes Einwirken auf den Datenträger das Berechnen der kryptographischen Funktion in dem Datenträger derart gezielt gestört wird, dass durch Vergleichen des gestört berechneten Funktionswerts mit einem ungestört berechneten Funktionswert ein - eventuell geheimer - Eingabewert oder in dem Datenträger zur Berechnung der Funktion gespeicherte, geheime Daten, beispielsweise ein geheimer Schlüssel, bestimmt werden können.

Für eine Reihe konkreter kryptographischer Funktionen sind bereits Fehlerangriffe bekannt, beispielsweise für die symmetrischen Verfahren DES (vgl. E. Biham, A. Shamir, "Differential Fault Analysis of Secret Key Cryptosystems", CRYPTO 1997), AES (vgl. P. Dusart, G. Letoureux, O. Vivolo, "Differential Fault Analysis on A.E.S", ACNS 2003) und SHACAL (R. Li, C. Li, C. Gong, "Differential Fault Analysis on SHACAL-1", FDTC 2009) sowie das asymmetrische Verfahren RSA (D. Boneh, R. A. DeMillo, R. J. Lipton, "On the Importance of Checking Cryptographic Protocols for Faults", Eurocrypt 1997) oder für verschiedene Stromchiffren (J. Hoch, A. Shamir, "Fault Analysis of Stream Ciphers", CHES 2004).

Ein spezifischer Fehlerangriff ist dabei zumeist genau auf die anzugreifende kryptographische Funktion abgestimmt. D.h. ein Fehlerangriff, der für eine erste kryptographische Funktion ein Ausspähen geheimer Daten ermöglicht, versagt für eine von der ersten Funktion abweichende zweite kryptographische Funktion. Bei Kenntnis eines spezifischen Fehlerangriffs auf eine spezifische kryptographische Funktion ist es in der Regel möglich, die Implementierung der Funktion in dem Datenträger gegen einen solchen Fehlerangriff zu schützen. Zumindest ist es aber möglich, einen Datenträger mit einer solchen kryptographischen Funktion auf Anfälligkeit gegenüber dem Fehlerangriff zu prüfen. Dazu wird, beispielsweise in spezialisierten Prüflaboren, der bekannte Fehlerangriff auf die Funktion zumindest teilweise simuliert, um das Verhalten des Datenträgers auf den Angriff zu beobachten und zu analysieren. Auf diese Weise kann die Sicherheit des Datenträgers gegenüber diesem Angriff geprüft werden.

Ist für eine von den oben angegebenen kryptographischen Funktionen abweichende Funktion noch kein spezifischer Fehlerangriff bekannt, so kann die vorstehend beschriebene Vorgehensweise nicht unverändert angewendet werden, um eine Implementierung einer solchen abweichenden kryptographischen Funktion auf einem portablen Datenträger auf Sicherheit gegenüber einem Fehlerangriff zu prüfen. Ebenso wenig ist es möglich, eine Implementierung einer solchen Funktion konkret gegenüber einem Fehlerangriff zu schützen.

Es ist demnach Aufgabe der vorliegenden Erfindung, ein Verfahren zum Prüfen und ein Verfahren zum Schützen weiterer kryptographischer Funktionen vorzuschlagen.

Diese Aufgabe wird durch zwei Verfahren mit den Merkmalen der unabhängigen Ansprüche gelöst. Vorteilhafte Ausgestaltungen und Weiterbildungen sind in den abhängigen Ansprüchen angegeben.

In einem erfindungsgemäßen Verfahren zum Prüfen einer Implementierung einer kryptographischen Funktion auf einem portablen Datenträger auf Sicherheit gegenüber einem Fehlerangriff wird ein Kompressionswert berechnet. Die Berechnung des Kompressionswertes erfolgt im Rahmen der Berechnung der kryptographischen Funktion. Der Kompressionswert wird dabei ausgehend von einem Vorwert und einem Eingabewert berechnet. Der Vorwert oder der Eingabewert oder beide Werte können geheime Daten umfassen. Bei der Berechnung des Kompressionswerts wird eine Kompressionsfunktion angewendet, die aus mehreren Runden und einer abschließenden Verknüpfung besteht. Ein Prüfen der Implementierung der kryptographischen Funktion umfasst dabei die folgenden Schritte: Es wird eine Berechnung der kryptographischen Funktion gestört. Dies kann beispielsweise durch eine geeignete externe Einwirkung auf den Datenträger geschehen. Dann wird die Ausgabe des Datenträgers bei gestörter Berechnung analysiert. Es kann dabei auch ein Vergleich der gestörten Ausgabe mit einer Ausgabe einer ungestörten Berechung erfolgen. Erfindungsgemäß umfasst die kryptographische Funktion ein abschließendes Verknüpfen des Vorwerts mit dem Ergebnis der letzten Runde der Kompressionsfunktion. Im Folgenden wird der Teil der Kompressionsfunktion, der nur die Runden, nicht aber die abschließende Verknüpfung umfasst, als "verkürzte Kompressionsfunktion" bezeichnet. Die Verknüpfung betrifft also das Ergebnis der verkürzten Kompressionsfunktion und den Vorwert. Der Fehlerangriff wird auf die Kompressionsfunktion als Teil der kryptographischen Funktion durchgeführt.

In analoger Weise wird in einem erfindungsgemäßen Verfahren zum Schützen einer Implementierung einer kryptographischen Funktion auf einem portablen Datenträger gegenüber einem Fehlerangriff ein Kompressionswert berechnet. Auch hier erfolgt die Berechnung des Kompressionswertes im Rahmen der Berechnung der kryptographischen Funktion. Der Kompressionswert wird wieder ausgehend von einem Vorwert und einem Eingabewert berechnet, wobei eine iterativ aufgebaute Kompressionsfunktion angewendet wird. Dabei werden vorgegebene Anteile der Berechnung des Kompressionswertes redundant durchgeführt. Erfindungsgemäß umfasst auch in diesem Verfahren die Kompressionsfunktion ein abschließendes Verknüpfen des Vorwerts mit dem Ergebnis der verkürzten Kompressionsfunktion. Ebenfalls wird der Fehlerangriff auf die Kompressionsfunktion, welche Teil der kryptographischen Funktion ist, durchgeführt.

Demnach umfasst ein erfindungsgemäßer portabler Datenträger einen Speicher und Prozessor sowie eine in dem Speicher gespeicherte Kryptographieeinrichtung. Diese ist eingerichtet, im Rahmen der Berechnung einer kryptographischen Funktion ausgehend von einem Vorwert und einem Eingabewert durch Anwenden einer Kompressionsfunktion bestehend aus einer verkürzten Kompressionsfunktion und einer abschließenden Verknüpfung einen Kompressionswert zu berechnen. Dabei werden vorgegebene Anteile der Berechnung des Kompressionswertes redundant durchgeführt.

Auf diese Weise wird es möglich, eine neue Klasse von kryptographischen Funktionen zu prüfen und zu schützen, nämlich kryptographische Hashfunktionen, wie beispielsweise SHA-1 oder Hashfunktionen der SHA-2-Familie wie SHA-224, SHA-256, SHA-384 oder SHA-512. Derartige Hashfunktionen finden ihre Anwendung in portablen Datenträgern beispielsweise als primitive Funktionen, d.h. Grundfunktionen, komplexerer kryptographischer Funktionen, so genannter "keyed hashfunctions", also derjenigen Hashfunktionen, bei deren Berechnung ein Geheimdatum mit eingeht. Beispiele sind hier die so genannten "Message Authentication Codes", kurz MACs. Somit kann nun auch die Implementierung solch wichtiger und sicherheitsrelevanter kryptographischer Funktionen auf einem portablen Datenträger zuverlässig geprüft und geschützt werden.

Eine kryptographische Hashfunktion bildet einen Eingabewert - in der Regel eine binäre Zeichenkette beliebiger Länge - auf einen Ausgabewert, den so genannten Hashwert, fester Länge ab. Dieser ist in der Regel erneut eine binäre Zeichenkette. Eine solche Hashfunktion ist im Wesentlichen als ein iteratives Verfahren aufgebaut. Eine zentrale Rolle spielt dabei die Kompressionsfunktion. Die Kompressionsfunktion erhält als Eingabe eine erste Zeichenkette einer ersten Länge und eine zweite Zeichenkette einer zweiten Länge und gibt als Ausgabe eine dritte Zeichenkette erneut erster Länge aus. In der Praxis wird der Eingabewert, nachdem er gegebenenfalls geeignet aufgefüllt worden ist, in eine gegebene Anzahl von Blöcken fester, nämlich oben genannter zweiter Länge aufgeteilt. Ein solches Auffüllen wird auch "Padding" genannt und dient dazu, dass alle gebildeten Blöcke, auch der letzte, die gleiche Länge haben. Zur Berechnung des Hashwerts für den Eingabewert wird letzterer nun folgendem Prozess unterworfen: Es wird ein Startwert oder erster Vorwert vorgegeben, welcher eine erste Länge besitzt. Anschließend wird die Kompressionsfunktion iterativ angewendet. Dabei dient der (i+1)-ten Iteration der Kompressionsfunktion das Ergebnis der i-ten Iteration sowie der i-te Block des Eingabewertes als Eingabe. Der Startwert ersetzt das Ergebnis der 0-ten Iteration. Die Blöcke der Eingabe werden ansteigend, beginnend mit dem 0-ten Block, nummeriert.

Die verkürzte Kompressionsfunktion zur kryptographischen Hashfunktion SHA-1 entspricht dabei z.B. genau der Abbildungsvorschrift der symmetrischen Blockchiffre SHACAL-1. Der hier verwendete Vorwert (Prehashwert) wird dort Klartext genannt. Der Eingabewert der SHA-1-Kompressionsfunktion entspricht dem geheimen Schlüssel im SHACAL-1-Verfahren.

Schließlich findet im Rahmen der Berechnung der kryptographischen Hashfunktion bei jeder Anwendung der Kompressionsfunktion eine Verknüpfung des Ergebnisses der verkürzten Kompressionsfunktion mit dem jeweiligen Vorwert statt, beispielsweise eine modulare Addition. Der Hashwert ist das Ergebnis der letzten Verknüpfung.

Eine Anwendung der Kompressionsfunktion kann allgemein wie folgt beschrieben werden. Der Vorwert wird in eine gegebene Anzahl von Anteilen gleicher Länge unterteilt. Beispielsweise fünf Anteile, die mit A0, B0, C0, D0 und E0 bezeichnet werden. Diese Anteile bilden einen so genannten Status. Ausgehend von diesem Status wird die Kompressionsfunktion durch Anwenden der einzelnen Runden ausgeführt. Das Ergebnis jeweils einer Anwendung einer Runde liefert den nächsten Status, welcher nach einer Anwendung also beispielsweise mit A1, B1, C1, D1 und E1 bezeichnet wird. Dabei hängt der Status nach einer Anwendung einer Runde, also das Ergebnis der Anwendung der Rundenfunktion, in genau definierter Weise von dem Status der vorherigen Anwendungen ab. In diese Abhängigkeit gehen sowohl pro Anwendung vorgegebene Verknüpfungen von Anteilen des vorhergehenden Status als auch Anteile des Blocks des Eingabewertes sowie weitere, vorgegebene Daten ein. Die Verknüpfungen können für verschiedene Anwendungen der Rundenfunktion verschieden vorgegeben sein.

Das Ergebnis der verkürzten Kompressionsfunktion, d.h. der Status nach der letzten Anwendung der Rundenfunktion, beispielsweise nach 80 Runden, wie sie im Zusammenhang mit SHA-1 durchgeführt werden, mit A80, B80, C80, D80, E80 bezeichnet, wird dann, wie erwähnt, zur Berechnung des Kompressionswerts Y mit dem Vorwert A0, B0, C0, D0, E0 verknüpft, für SHA-1 beispielsweise in der Form:

$$Y \quad = \quad YA \mathbin{||} YB \mathbin{||} YC \mathbin{||} YD \mathbin{||} YE$$

$$= \quad (A80{+}A0) \mathbin{||} (B80{+}B0) \mathbin{||} (C80{+}C0) \mathbin{||} (D80{+}D0) \mathbin{||} (E80{+}E0),$$

wobei "| |" eine Konkatenation von Zeichenketten und "+" eine Addition mod $2^{32}$ bezeichnet.

Im Folgenden sollen zuerst bevorzugte Ausführungsformen des erfindungsgemäßen Prüfverfahrens beschrieben werden. Wie erwähnt, umfasst ein Prüfen einer Implementierung der kryptographischen Funktion das Stören der Berechnung der kryptographischen Funktion sowie das Analysieren der Ausgabe des Datenträgers bei gestörter Berechnung. Anhand der Analyse dieser Ausgabe kann dann beispielsweise erkannt werden, ob der Datenträger die Störung der Berechnung erkannt hat, wie oft die Berechnung gestört werden kann, bis der Datenträger reagiert, wie die Reaktion des Datenträgers aussieht etc. Der Umfang der Störung kann dabei schrittweise ausgeweitet werden, falls der Datenträger erste Störungen nicht erkennt bzw. der Ausgabe des Datenträgers bei gestörter Berechnung nicht entnommen werden kann, ob der Datenträger die Störung bereits erkannt und eventuell bereits reagiert hat. Eine Reaktion des Datenträgers bei Erkennen einer Störung kann vielfältig ausfallen. Ein gegen den simulierten Fehlerangriff gesicherter Datenträger wird in jedem Fall so reagieren, dass, selbst wenn der Angriff vollständig durchgeführt wird, keine sensiblen und sicherheitsrelevanten Daten den Datenträger verlassen. Spezifische Sicherungsmaßnahmen des Datenträgers werden später mit Bezug auf das erfindungsgemäße Schutzverfahren beschrieben.

Die Schritte des Störens der Berechnung der kryptographischen Funktion und des Analysierens der Ausgabe des Datenträgers bei gestörter Berechnung können insbesondere ein erstes gezieltes Stören der Berechnung der kryptographischen Funktion umfassen. Ein gezieltes Stören bedeutet dabei, dass die Berechnung der kryptographischen Funktion an einer genau vorgegebenen Stelle in vorgegebener Weise gestört wird, um beispielsweise ein Zwischenergebnis zu verfälschen, einen vorgegebenen Ablauf zu stören, eine Statusmeldung abzufangen oder zu verändern oder dergleichen. Eine Störung beinhaltet aber in der Regel, dass das Ergebnis der Störung nicht genau vorherzusehen ist und somit ein zufälliges Moment beinhaltet. Anschließend kann dann im Rahmen der Analyse der Ausgabe der gestörten Berechnung zumindest ein Anteil des Vorwerts auf Grundlage der Ausgabe des Datenträgers in Reaktion auf das erste gezielte Stören bestimmt werden. Letzteres gilt allerdings nur dann, wenn der Datenträger den Angriff nicht erkennt, sondern das Ergebnis der gestörten Berechnung ausgibt, ohne diese Ausgabe selbst nochmals zu verfälschen. Eine seitens des Datenträgers geeignet verfälschte Ausgabe der gestörten Berechnung macht einem Angreifer eine sinnvolle Analyse zum Ausspähen von sensiblen Daten unmöglich. Dann aber hätte das Prüfverfahren bereits ergeben, dass der Datenträger sicher gegen den Fehlerangriff ist und könnte bereits an dieser Stelle beendet werden.

Die Schritte des Störens der Berechnung der kryptographischen Funktion und des Analysierens der Ausgabe des Datenträgers bei gestörter Berechnung können weiterhin den Schritt des Bestimmens eines Zwischen-Ergebnisses einer der Anwendungen der Kompressionsfunktion aus dem zumindest einen bestimmten Anteil des Vorwerts umfassen. Wiederholte - aus Sicht des Angreifers, welcher mit dem Prüfverfahren simuliert wird - erfolgreiche Durchführungen des vorhergehenden Schrittes könnten dazu führen, dass große Anteile des Vorwerts bekannt werden. Dies hätte aufgrund des Aufbaus der kryptographischen Funktion zur Folge, dass ein Ergebnis einer der letzten Anwendungen der Rundenfunktion dadurch zumindest zum Teil bestimmt werden könnte. Auf Basis der Ausgabe des Datenträgers könnte dann die Verknüpfung mit dem Vorwert im Rahmen der Analyse der Ausgabe rückgängig gemacht, d.h. herausgerechnet, werden. Die Kenntnis eines solchen Rundenergebnisses liefert dem Angreifer, wie nachfolgend beschrieben, mittels weiterer gezielter Angriffe gute Chancen, sensible Daten aus dem Datenträger auszuspähen. Dieser Prüfschritt soll also untersuchen, ob der Datenträger in der Lage ist, das Austreten von Informationen über den Vorwert auch bei gezielt gestörter Berechnung soweit zu begrenzen, dass es nicht möglich ist, große Anteile eines Zwischen-Ergebnisses einer Anwendung der Kompressionsfunktion zu bestimmen.

Schließlich kann im Rahmen des Störens der Berechnung der kryptographischen Funktion und des Analysierens der Ausgabe des Datenträgers bei gestörter Berechnung ein zweites gezieltes Stören der Berechnung der kryptographischen Funktion stattfinden. Dieses zweite gezielte Stören erfolgt dabei nicht identisch, aber beispielsweise analog zu einem Stören, wie es in der Literatur mit Bezug auf die symmetrische Blockchiffre SHACAL-1 beschrieben worden ist. Wenn, wie vorstehend beschrieben, der Angreifer in der Situation ist, in der er ein Zwischen-Ergebnis einer Anwendung der Kompressionsfunktion im Wesentlichen vollständig kennt, so ist er in genau der Situation, in der der Angriff auf eine kryptographische Funktion startet, welche auf ein abschließendes Verknüpfen mit dem Vorwert verzichtet, aber die gleiche verkürzte Kompressionsfunktion verwendet wie die angegriffene Funktion. Nachfolgend kann dann der Eingabewert aus dem bestimmten Zwischen-Ergebnis der Kompressionsfunktion in Verbindung mit der Ausgabe des Datenträgers in Reaktion auf das zweite gezielte Stören bestimmt werden. Auch eine solche Bestimmung kann im Wesentlichen analog zu der Vorgehensweise mit Bezug auf den Angriff auf SHACAL-1 erfolgen. In diesem Prüfschritt wird also nicht nur die Sicherheit des Datenträgers gegen die implementierte Hashfunktion geprüft, sondern gleichzeitig die Sicherheit gegenüber einem Angriff auf die kryptographischen Funktion, die sich von der implementierten dadurch unterscheidet, dass die abschließende Verknüpfung mit dem Vorwert unterbleibt.

Bevorzugte Ausführungsformen der vorstehend beschriebenen Prüfschritte werden im Folgenden näher erläutert. Wie erwähnt kann als ein Prüfschritt zusätzlich eine ungestörte Berechnung der kryptographischen Funktion erfolgen. Diese ungestörte Berechnung kann vor oder nach dem ersten gezielten Stören der Berechnung der kryptographischen Funktion stattfinden. Das erste gezielte Stören der Berechnung der kryptographischen Funktion kann dann derart erfolgen, dass die kryptographische Funktion mehrfach berechnet wird, wobei bei jeder der Berechnungen ein erster vorgegebener Zwischenwert der Berechnung gezielt gestört wird. Bevorzugte Angriffsziele sind dabei solche Zwischenwerte, welche Anteile eines Status einer der letzten Anwendungen der Rundenfunktion bilden. Mit Bezug auf SHA-1 sind dies insbesondere die Anteile A79, A78 und A77 des 79., 78. bzw. 77. Status. Es wird in diesem Prüfschritt also beispielsweise bei jeder der mehrfachen gestörten Berechnungen der kryptographischen Funktion stets der Zwischenwert A79 gestört. Dieser gestörte Zwischenwert hat einen ableitbaren Einfluss auf das Endergebnis der gestörten Berechnung der kryptographischen Funktion, den gestörten Kompressionswert. Die Menge der gestörten Kompressionswerte wird dann, wie nachfolgend beschrieben, mit Bezug auf einen ungestörten Kompressionswert, analysiert. Analog kann für andere Zwischenwerte, beispielsweise A78 oder A77 vorgegangen werden.

Der Schritt des Bestimmens des zumindest einen Anteils des Vorwerts auf Grundlage der Ausgabe des Datenträgers in Reaktion auf das erste gezielte Stören der kryptographischen Funktion, wie es eben beschrieben worden ist, kann dann folgende Schritte umfassen: Die Ausgabe der Mehrzahl der in dem ersten vorgegebenen Zwischenwert gestörten Berechnungen der kryptographischen Funktion wird mit der Ausgabe der ungestörten Berechnung der kryptographischen Funktion verglichen. Dies geschieht, indem die gestörten Ausgaben mit der ungestörten Ausgabe unter Berücksichtigung der Definition der kryptographischen Funktion in Beziehung gesetzt werden. Dadurch wird in einem weiteren Schritt das Ableiten einer Menge von Kandidaten für zumindest einen vorgegebenen Anteil des Vorwerts aus dem Ergebnis des Vergleichens ermöglicht.

Um das vorherige Beispiel mit Bezug auf SHA-1 aufzunehmen, kann auf Basis einer Menge von im Zwischenwert A79 gestörten Berechnungen der kryptographischen Funktion zumindest eine Menge von Kandidaten für den Anteil B0 des Vorwerts bestimmt werden. Ähnliches gilt für C0 und A78 sowie D0 und A77.

Die Bestimmung einer Menge von Kandidaten für einen Anteil des Vorwerts bedeutet dabei allgemein, dass der Anteil nicht eindeutig bestimmt werden kann, sondern nur näherungsweise oder fast vollständig. Dies bedeutet wiederum - beim dem Anteil handelt es sich um eine Zeichenkette - dass viele oder fast alle Bits der Zeichenkette bestimmt werden können, einige Stellen allerdings noch nicht bestimmbar sind. Jede mögliche Ergänzung dieser noch nicht bestimmbaren Bits liefert einen Kandidaten für den Anteil des Vorwerts. Sind also beispielsweise drei Bits des Anteils des Vorwerts noch nicht bestimmbar, so resultieren daraus acht Kandidaten für den Anteil, da jedes Bit prinzipiell zwei Werte - "0" oder "1" - annehmen kann.

Der Schritt des Bestimmens des zumindest einen Anteils des Vorwerts auf Grundlage der Ausgabe des Datenträgers in Reaktion auf das erste gezielte Stören kann weiterhin folgende Schritte umfassen: Es wird ein Gleichungssystems auf Basis von solchen Werten aufgestellt, welche sich aus der ungestörten Berechnung der kryptographischen Funktion und der Mehrzahl der gezielt gestörten Berechnungen der kryptographischen Funktion ergeben. Das heißt, das vorstehend beschriebene Inbeziehungsetzen des gestörten Ausgabewerts und des ungestörten Ausgabewerts erfolgt in Form des genannten Gleichungssystems. Das Gleichungssystem hat dabei die Gestalt, dass korrekt bestimmte Anteile des Vorwerts Lösungen des Gleichungssystems darstellen. Die Menge der Kandidaten für den zumindest einen vorgegebenen Anteil des Vorwerts wird dann dadurch reduziert, dass solche Kandidaten verworfen werden, welche das Gleichungssystem nicht erfüllen. Auf diese Weise wird die Anzahl der Kandidaten verkleinert. Der Umfang einer Enumeration, welche zum Testen aller möglichen Kandidaten erforderlich wäre, kann dadurch erheblich reduziert werden.

Vorstehend beschriebene Schritte dienten dem Ableiten eines Anteils des Vorwerts. Nachfolgend beschriebene Schritte zeigen bevorzugte Ausführungsformen solcher Schritte, die zum Ableiten eines Zwischen-Ergebnisses einer Anwendung der Kompressionsfunktion dienen.

Gemäß einer bevorzugten Ausführungsform des erfindungsgemäßen Prüfverfahrens kann der Schritt des Bestimmens eines Zwischen-Ergebnisses einer der Anwendungen der Kompressionsfunktion aus dem zumindest einen bestimmten Anteil des Vorwerts folgende Schritte umfassen: Unter Verwendung nicht verworfener Kandidaten für den zumindest einen vorgegebenen Anteil des Vorwerts wird eine Menge von Kandidaten für das Zwischen-Ergebnis einer Anwendung der Kompressionsfunktion abgeleitet. Auch in diesem Fall entspricht eine Menge von Kandidaten einem oder mehreren lediglich teilweise eindeutig bestimmten Ergebnissen. Anschließend wird das Zwischen-Ergebnis einer Anwendung der Kompressionsfunktion durch geeignete Auswahl eines Kandidaten aus der abgeleiteten Menge von Kandidaten bestimmt. Anstatt eines Kandidaten kann auch eine kleine Restmenge von sehr aussichtsreichen Kandidaten ausgewählt werden. Jeder der Kandidaten wird dann im Folgenden separat als potentielles Zwischen-Ergebnis einer Anwendung der Kompressionsfunktion behandelt.

Ist das Zwischen-Ergebnis einer Anwendung der Kompressionsfunktion im Wesentlichen bestimmt, erfolgt gemäß einer bevorzugten Ausführungsform des erfindungsgemäßen Prüfverfahrens ein weiterer Angriff auf die kryptographische Funktion. Vorzugsweise umfasst dieses zweite gezielte Stören der Berechnung der kryptographischen Funktion folgende Schritte: Die kryptographische Funktion wird erneut mehrfach berechnet, wobei bei jeder der Berechnungen ein zweiter vorgegebener Zwischenwert der Berechnung gezielt gestört wird. Dieser zweite Zwischenwert unterscheidet sich vom dem vorstehend genannten ersten Zwischenwert. Mit Bezug auf das vorstehend beschriebene Beispiel im Zusammenhang mit SHA-1 kann die gezielte Störung hier in einem der Zwischenwert Bi, i = 76, 74, 72, 70, 68, 66, 64, 62, 60, erfolgen. Für jede Störung eines dieser Zwischenwerte wird die kryptographische Funktion mehrfach berechnet. Die Störung der Berechnung in dem zweiten Zwischenwert dient dem Ableiten jeweils eines Anteils des Eingabewertes, wie nachfolgend dargestellt.

Vorzugsweise umfasst der Schritt des Bestimmens des Eingabewerts aus dem bestimmten Zwischen-Ergebnis der Kompressionsfunktion in Verbindung mit der Ausgabe des Datenträgers in Reaktion auf das zweite gezielte Stören folgende Schritte: Anteile des Eingabewertes werden unter Verwendung der Ausgabe der Mehrzahl der in dem zweiten vorgegebenen Zwischenwert gestörten Berechnungen der kryptographischen Funktion und der Ausgabe einer ungestörten Berechnung der kryptographischen Funktion abgeleitet. Schließlich wird der Eingabewert aus den abgeleiteten Anteilen des Eingabewerts bestimmt.

Diese letzten beiden Schritte können im Zusammenhang mit SHA-1 in enger Anlehnung an die Vorgehensweise im Zusammenhang mit dem Fehlerangriff auf SHACAL-1 durchgeführt werden, wie vorstehend angedeutet. Im Unterschied zum dort beschriebenen Verfahren erfolgt die zweite gezielte Störung an anderen Zwischenwerten. Dies beruht darauf, dass als Ausgangspunkt, d.h. als Ergebnis einer Anwendung der Rundenfunktion, vorliegend die vorletzte und nicht die letzte Anwendung der Rundenfunktion betrachtet wird. Weiterhin im Unterschied zu dem Fehlerangriff auf SHACAL-1 ist es im Zusammenhang mit dem vorliegenden Verfahren in vielen Fällen notwendig, eine größere Menge von Kandidaten für einen Anteil des Vorwerts oder ein Ergebnis einer Anwendung der Rundenfunktion zu prüfen. Der Angriff auf SHACAL-1 erlaubt, aufgrund der einfacheren Struktur der zugrunde liegenden kryptographischen Funktion, eine präzisere Bestimmung von aufgrund eines gezielten Störens abgeleiteten Werten.

Die zuletzt beschriebenen Schritte entsprechen im Wesentlichen einem vollständigen Durchführen eines im Rahmen dieser Erfindung vorgestellten, neuartigen Fehlerangriffs auf eine kryptographische Hashfunktion. Auf diese Weise kann eine Implementierung einer solchen Hashfunktion auf einem portablen Datenträger nicht nur allgemein auf Fehlerangriffe unspezifischer Art, sondern auch auf Sicherheit gegenüber einem auf die Funktion zugeschnittenen Fehlerangriff geprüft werden. Datenträger, welche diesem Angriff widerstehen, können als sicher gegenüber diesem Fehlerangriff angesehen werden. Gelingt es allerdings mittels des beschriebenen Prüfverfahrens, zumindest Anteile des eventuell geheimen Eingabewertes zu bestimmen, sollte die Implementierung der kryptographischen Hashfunktion angepasst werden. Sinnvoll sind insbesondere Schutzmaßnahmen, wie sie nachfolgend mit Bezug auf bevorzugte Ausführungsformen des erfindungsgemäßen Verfahrens zum Schützen einer solchen Implementation beschrieben werden.

Wie erwähnt, werden im Rahmen der Implementation der kryptographischen Funktion Redundanzen vorgesehen. Insbesondere werden vorgegebene Anteile der Berechnung des Kompressionswertes redundant durchgeführt. Damit wird das Ziel verfolgt, einen Fehlerangriff auf den Datenträger dadurch zu erkennen, dass an sich identische Berechnungen verschiedene Ergebnisse liefern. Wenn bei der internen, mehrfachen Berechnung ein und desselben Wertes verschiedene Ergebnisse auftreten, kann von der Störung zumindest einer der Berechnungen, beispielsweise durch einen Fehlerangriff, ausgegangen werden. Die Wahrscheinlichkeit, dass es einem Angreifer gelingt, sämtliche der mehrfachen Berechnungen in genau der gleichen Weise zu stören, ist verschwindend gering.

Die Anteile der Berechnung des Kompressionswerts, welche redundant durchgeführt werden, betreffen vorzugsweise eine oder mehrere der letzten

Anwendungen der Rundenfunktion. Diese Anteile der Berechnung der kryptographischen Funktion und die dabei auftretenden Zwischenwerte sind Hauptangriffsziele für Fehlerangriffe. Gestörte Ausgabedaten können, wenn der Fehler in diesen Teilen der Berechnung induziert wird, mit größtem Erfolg derart analysiert werden, dass geheime Eingabedaten oder geheime datenträgerinterne Daten, beispielsweise geheime Schlüssel, abgeleitet werden können.

Vorzugsweise werden die Anteile der Berechnung datenträgerintern mittels verschiedener Hardwarekomponenten durchgeführt werden. Auf diese Weise erfolgen zwei völlig voneinander unabhängige Berechnungen. Die Störung der einen Berechnung - auf Basis der einen Hardwarekomponente - kann die Berechnung mittels der zweiten Hardwarekomponente nicht beeinflussen oder stören. Des Weiteren ist es für einen Angreifer sehr aufwendig, einen Angriff derart aufzubauen, dass an zwei verschiedenen Stellen der Datenträgerhardware gleichzeitig Fehlerangriffe gestartet werden. Alternativ oder zusätzlich kann die mehrfache Berechnung aber auch unter Verwendung der jeweils gleichen Hardwarekomponente erfolgen. Es müsste dem Angreifer dann gelingen, den genauen Zeitpunkt der jeweiligen zugehörigen redundanten Berechnung vorherzusehen. Wie bereits vorstehend beschrieben, ist es selbst in dem Fall, dass es einem Angreifer gelingt, redundant ausgeführte Berechnungen der Kompressionsfunktion jeweils zu stören, sehr unwahrscheinlich, dass jede dieser Störungen sich genau gleich auswirkt. D.h. dass in der Regel eine erste Störung einen ersten Effekt zeigt, der vom Effekt einer zweiten Störung unterscheidbar ist. Somit kann der Datenträger auch diesen Fall zuverlässig erkennen.

Im Rahmen der mehrfachen, redundanten Berechnung der Kompressionsfunktion können Eingabedaten zur Berechnung der Anteile für die mehrfachen Berechnungen miteinander verglichen werden. Auf diese Weise kann der Datenträger erkennen, dass solche Anteile der Berechnungen der Kompressionsfunktion, welche der Berechnung des vorliegend betrachteten Anteils vorgelagert sind, bereits gestört worden sind. Auf diese Weise ist es möglich, den Fehlerangriff nicht nur als solchen zu erkennen, sondern auch zu lokalisieren, d.h. zu erkennen, welche Anteile der Berechnung der Kompressionsfunktion angegriffen werden. Alternativ oder zusätzlich können Ausgabedaten der mehrfachen Berechnungen der Anteile miteinander verglichen werden. Auch damit ist eine Lokalisierung des Angriffs möglich.

Datenträgerintern können zudem Prüfsummen vorgesehen sein, welche insbesondere Zwischenergebnisse der Berechnung der Kompressionsfunktion absichern. Solche Prüfsummen können verwendet werden, um Fehlerangriffe auf die Anteile der Berechnung zu erkennen, welche von der Prüfsumme erfasst werden. Die Prüfsummen können beispielsweise geeignet zur Fehlererkennung und/oder zur Fehlerkorrektur sein.

Bevorzugte Ausführungsformen des erfindungsgemäßen Datenträgers sind dementsprechend eingerichtet, die Berechnung der vorgegebenen Anteile des Kompressionswertes in der vorstehend beschriebenen Weise redundant durchzuführen.

Bei Erkennen von Inkonsistenzen im Zusammenhang mit der mehrfachen Berechnung der vorgegebenen Anteile der Kompressionsfunktion werden Sicherungsmaßnahmen im Datenträger vorgenommen. Der Datenträger umfasst dazu eine Fehlerangriffserkennungseinrichtung. Diese ist eingerichtet, Inkonsistenzen im Zusammenhang mit der redundanten Berechnung der vorgegebenen Anteile der Kompressionsfunktion zu erkennen und im Falle erkannter Inkonsistenzen Sicherungsmaßnahmen in dem Datenträger vorzunehmen.

Inkonsistenzen sind beispielsweise, wie erwähnt, voneinander abweichende Eingabedaten eines vorgegebenen Anteils einer mehrfach durchgeführten Berechnung, voneinander abweichende Ergebnisse der mehrfachen Berechnungen, Prüfsummenfehler und dergleichen. Eine Inkonsistenz liegt in jedem Fall dann vor, wenn aufgrund mehrfacher Berechnung intern erzeugte Hashwerte zu identischen Eingabedaten und identischen Vorwerten voneinander abweichen.

Die Sicherungsmaßnahmen können verschiedengestaltig sein. Verschiedene Sicherungsmaßnahmen können unabhängig voneinander eingesetzt werden. Es ist auch möglich, Sicherungsmaßnahmen in Kombination miteinander vorzusehen. Zum einen kann ein Fehlerzähler in dem Datenträger vorgesehen sein. Mittels des Fehlerzählers werden erkannte Fehlerangriffe auf den Datenträger allgemein oder die Implementation der kryptographischen Funktion auf dem Datenträger gezählt. Der Fehlerzähler wird dabei von der Fehlerangriffserkennungseinrichtung betätigt. Verlässt der Fehlerzähler einen vorgegebenen Bereich, können weitergehende Sicherungsmaßnahmen greifen.

Solche weiteren Sicherungsmaßnamen sind beispielsweise ein Sperren des Datenträgers oder zumindest der kryptographischen Funktion auf dem Datenträger. Damit wird ein Ausspähen von geheimen Daten verhindert. Der Datenträger kann auch vollständig deaktiviert werden. Diese Maßnahmen können auch unabhängig von einem Fehlerzähler bei Erkennen von Inkonsistenzen, die auf einen Fehlerangriff hindeuten, greifen. Auch diese Sicherungsmaßnahmen können von der Fehlerangriffserkennungseinrichtung durchgeführt oder zumindest initiiert werden.

Eine weitere wirkungsvolle Sicherungsmaßnahme besteht darin, dass der Datenträger für eine gestörte Berechnung keine Ausgabedaten ausgibt. Dem Angreifer ist es dann nicht möglich, anhand gestörter und ungestörter Ausgabedaten geheime Eingabedaten abzuleiten. Schließlich kann der Datenträger als Reaktion auf einen Fehlerangriff auch seinerseits gestörte Ausgabedaten erzeugen und ausgeben. Das Verhindern der Ausgabe von durch einen Angriff gestörten Ausgabedaten oder die Erzeugung datenträgerintern gestörter Daten sowie deren Ausgabe kann von der Fehlerangriffserkennungseinrichtung gesteuert werden. Auch in diesem Fall scheitert die Analyse des Angreifers, da eine solche Analyse in der Regel auf einem spezifischen Angriff beruht und lediglich die Störung einzelner Anteile der Berechnung erwartet werden. Sobald der Datenträger andere, nicht vorhersehbare Anteile der Ausgabe verfälscht, kann ein systematisches Ableiten von Eingabedaten anhand der gestörten Ausgabe nicht mehr erfolgen.

Die vorliegende Erfindung wird nachfolgend mit Bezug auf die beiliegenden Zeichnungen beispielhaft beschrieben. Darin zeigen:

Figur 1      eine bevorzugte Ausführungsform eines erfindungsgemäßen Datenträgers;

Figur 2      schematisch abschließende Anteile der Berechnung der kryptographischen Hashfunktion SHA-1,

Figur 3      grundlegende Schritte einer bevorzugten Ausführungsform eines erfindungsgemäßen Prüfverfahrens und

Figur 4      einzelne, die grundlegenden Schritte aus Figur 3 verfeinernde Schritte der bevorzugten Ausführungsform des Prüfverfahrens.

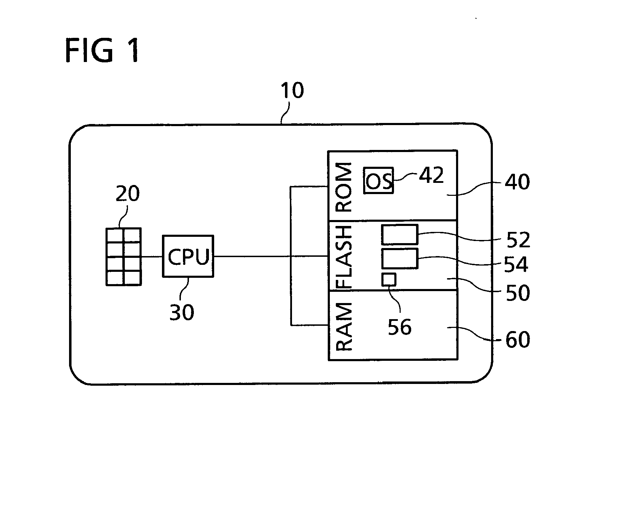

Mit Bezug auf Fig. 1 umfasst ein Datenträger 10, der hier als Chipkarte dargestellt ist, eine Datenkommunikationsschnittstelle 20, einen Prozessor 30 sowie verschiedene Speicher 40, 50 und 60. Der Datenträger 10 kann auch in anderer Bauform vorliegen.

Als Datenkommunikationsschnittstelle 20 umfasst der Datenträger 10 ein Kontaktfeld 20 zur kontaktbehafteten Datenkommunikation. Alternativ oder zusätzlich kann eine Antennenspule (nicht gezeigt) zur kontaktlosen Datenkommunikation vorgesehen sein.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

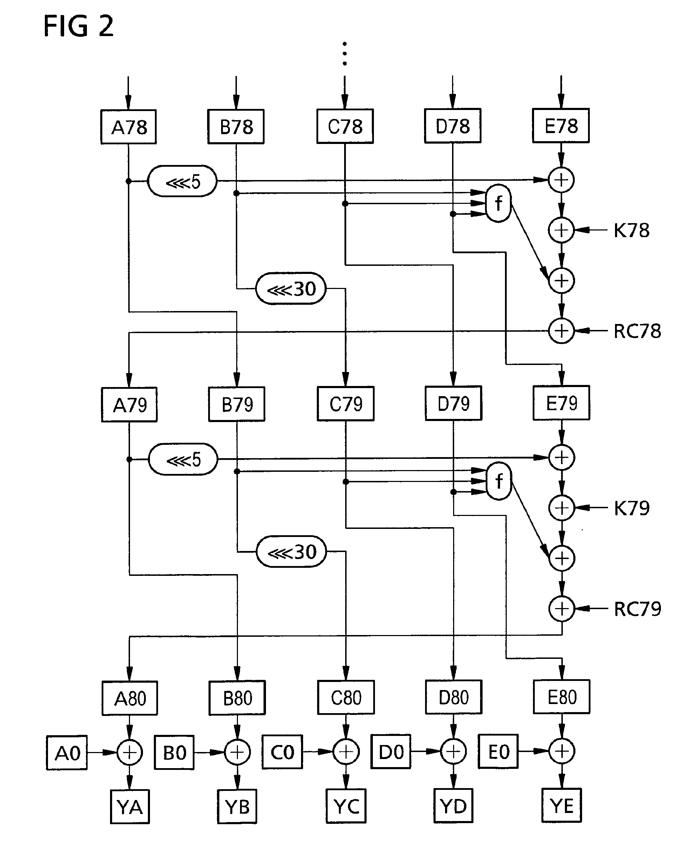

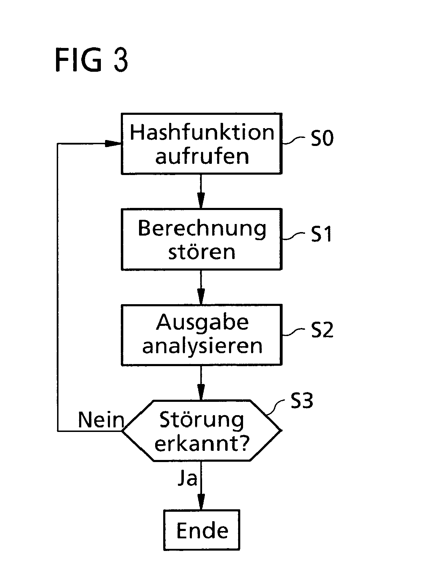

Der Speicher 50 umfasst eine Kryptographieeinrichtung 52, mittels welcher kryptographische Funktionen, insbesondere eine kryptographische Hashfunktion, beispielsweise SHA-1 oder eine Hashfunktion der SHA-2-Familie, sowie MACs unter Verwendung von SHA-1 und dergleichen, berechnet werden können. Die Funktionsweise der Kryptographieeinrichtung 52 wird mit Bezug auf Fig. 2 genauer beschrieben. Eine ebenfalls in dem Speicher 50 gespeicherte Fehlerangriffserkennungseinrichtung 54 dient der Erkennung von Fehlerangriffen auf den Datenträger 10, insbesondere auf die Berechnung kryptographischer Funktionen in dem Datenträger 10. Die Funktionsweise der Fehlerangriffserkennungseinrichtung 54 sowie eines Fehlerzählers 56 wird nachfolgend mit Bezug auf Fig. 3 genauer beschrieben. Der Speicher 50 kann weitere Applikationen und Daten enthalten, beispielsweise einen Nutzer betreffende Daten.

Der flüchtige, wiederbeschreibbare RAM-Speicher 60 dient dem Datenträger 10 als Arbeitsspeicher.

Bevor ein Verfahren zum Prüfen und Schützen einer Implementierung einer kryptographischen Funktion, welche auf dem Datenträger 10 mittels der Kryptographieeinrichtung 52 berechenbar ist, dargestellt werden kann, müssen einige Bezeichnungen eingeführt werden. Die nachfolgende Darstellung beschreibt exemplarisch die Hashfunktion SHA-1 als in dem Datenträger 10 angegriffene kryptographische Funktion. Andere, ähnliche Funktionen könnten ebenfalls detailliert beschrieben werden, beispielsweise Funktionen aus der SHA-2-Familie, wie SHA-224, SHA-256, SHA-384 oder SHA-512.

Nachfolgend werden die folgenden Bezeichnungen verwendet:

X || Y      bezeichnet die Konkatenation oder Verkettung von Zeichenketten X und Y; wenn nichts anderes angegeben ist, sind damit binäre Zeichenketten gemeint, d.h. Zeichenketten über dem Alphabet {0,1}. Ein Zeichen einer solchen Zeichenkette wird dem nach als ein Bit bezeichnet.

X + Y      bezeichnet eine Addition modulo $2^{32}$;

X - Y      bezeichnet eine Subtraktion modulo $2^{32}$.

X & Y      bezeichnet ein bitweises AND der Zeichenketten X und Y,

X v Y      bezeichnet ein bitweises OR der Zeichenketten X und Y,

X XOR Y      bezeichnet ein bitweises XOR der Zeichenketten X und Y,

$\neg$X      bezeichnet das bitweise Komplement der Zeichenkette X, und

X <<< s      bezeichnet eine Linksrotation der Zeichenkette X um s Bits, d.h. die Bits der Zeichenkette werden zyklisch um s Stellen nach links verschoben.

Eine Hashfunktion ist eine Funktion, welche einen Bitstring beliebiger Länge auf einen Bitstring fester Länge, hier r Bits, abbildet: $\{0,1\}^* \rightarrow \{0,1\}^r$. Die Funktion ist in der Regel als iterativer Prozess, basierend auf einer sogenannten Kompressionsfunktion aufgebaut. Diese Kompressionsfunktion wird mit HashKomp: $\{0,1\}^r \times \{0,1\}^n \rightarrow \{0,1\}^r$ bezeichnet. Sie bildet eine Eingabe, bestehend aus einer ersten Zeichenkette einer ersten Länge, hier r, und einer zweiten Zeichenkette zweiter Länge, hier n, auf eine Ausgabe, d.h. eine dritte Zeichenkette erneut erster Länge r, ab. Daher auch der Name Kompressionsfunktion. Eine spezifische Kompressionsfunktion, wie sie im Zusammenhang mit SHA-1 verwendet wird, wird nachfolgend detailliert beschrieben.

Ein Eingabewert M aus $\{0,1\}^*$, welcher der Hashfunktion übergeben wird, wird zuerst in t Blöcke fester Länge n unterteilt. Gegebenenfalls wird M dazu noch auf eine geeignete Länge aufgefüllt (so genanntes "Padding"), beispielsweise mittels zufälliger Bits. Es gilt $M = M_0 || M_1 || ... || M_{t-1}$ mit Mj aus $\{0,1\}^n$. Die Berechnung des Hashwerts $H = $ Hash(M) erfolgt dann wie folgt:

$$H_0 := \text{erster Vorwert bzw. Startwert}$$

$$H_{j+1} := \text{HashKomp}(H_j, M_j); \; j = 1, …, t\text{-}1;$$

$$H := H_t.$$

D.h. die Kompressionsfunktion HashKomp erhält als Eingabe beim j-ten Aufruf das Ergebnis des (j-1)-ten Aufrufs sowie den j-ten Block Mj des Eingabewertes M.

Die Abbildungsvorschrift der Kompressionsfunktion HashKomp wird im Folgenden mit Bezug auf Fig. 2 beschrieben.

Ein 512 Bits langer Block K:= Mj des Eingabewerts, welcher der Kompressionsfunktion zusammen mit der Zeichenkette P:=Hj als Eingabe übergeben wird, wird in weitere sechzehn Blöcke $K_0$, $K_1$, ... $K_{15}$ unterteilt: $K = K_0 \,||\, K_1 \,||\, ... \,||\, K_{15}$. Die Blöcke $K_i$ werden, aus nachfolgend genannten Gründen, auch als "Rundenschlüssel" bezeichnet. Weitere solche Rundenschlüssel für i = 16, ..., 79 ergeben sich aus der folgenden Vorschrift:

$$K_i = (K_{i\text{-}3} \; XOR \; K_{i\text{-}8} \; XOR \; K_{i\text{-}14} \; XOR \; K_{i\text{-}16}) \lll 1.$$

Weiter wird der Vorwert P, welcher bei der ersten Anwendung der Kompressionsfunktion dem Startwert entspricht, in fünf Blöcke der Länge 32 Bit aufteilt, den so genannten (0-ten) Status: P = A0 || B0 || C0 || D0 || E0.

Beginnend mit diesem Anfangsstatus P werden nun 80 so genannte Status-Updates vorgenommen. Dafür gelten die folgenden Berechnungsvorschriften:

$$A_{i+1} := (A_i \lll 5) + f_i (B_i, C_i, D_i) + E_i + RC_i + K_i;$$

$$B_{i+1} := A_i;$$

$$C_{i+1} := B_i \lll 30;$$

$$D_{i+1} := C_i;$$

$$E_{i+1} := D_i;$$

Die letzten beiden Status-Updates, d.h. der 78-te und der 79-te sind in Fig. 2 veranschaulicht.

Hierbei ist $RC_i$ eine öffentlich bekannte Rundenkonstante und $K_i$ der i-te Rundenschlüssel, wie vorstehend definiert.

Die Funktionen $f_i$ sind wie folgt definiert:

$$f_i (X, Y, Z) := (X\&Y) \lor (\neg X \& Z) \qquad \text{für } 0 \le i \le 19;$$

$$f_i (X, Y, Z) := (X \; XOR \; Y \; XOR \; Z) \qquad \text{für } 20 \le i \le 39;$$

$$f_i (X, Y, Z) := (X\&Y) \lor (X \& Z) \lor (Y \& Z) \qquad \text{für } 40 \le i \le 59;$$

$$f_i(X, Y, Z) := (X \ \text{XOR} \ Y \ \text{XOR} \ Z) \qquad \text{für } 60 \leq i \leq 79.$$

Die Ausgabe des letzten Status ergibt sich demnach als A80 || B80 || C80 || D80 || E80.

Dieser letzte Status wird abschließend mit dem Vorwert P per Addition verknüpft, wie dies ebenfalls in Fig. 2 zu sehen ist, so dass insgesamt gilt:

$$\text{HashKomp}(P, K)$$
$$:= \quad (A80+A0) \ || \ (B80+B0) \ || \ (C80+C0) \ || \ (D80+D0) \ || \ (E80+E0).$$
$$:= \quad YA \ || \ YB \ || \ YC \ || \ YD \ || \ YE.$$

Der Teil der Kompressionsfunktion, mit dem aus den Eingaben P und K der Status A80 || ... || E80 berechnet wird, wird hier "verkürzte Kompressionsfunktion" genannt. Die Kompressionsfunktion besteht also aus der verkürzten Kompressionsfunktion und dem gerade beschriebenen letzten Verknüpfungsschritt. Die verkürzte Kompressionsfunktion des SHA-1 gleicht nun exakt der Abbildungsvorschrift, die in der symmetrischen Blockchiffre SHACAL-1 verwendet wird. Dort fehlt also die abschließende Verknüpfung. Der Vorwert P entspricht dort dem eingegebenen Klartext, der Block K der Eingabedaten entspricht dort einem geheimen Schlüssel - daraus erklärt sich der Name "Rundenschlüssel" für die Teilblöcke $K_i$. Während ein Fehlerangriff auf SHA-1 darauf abzielt, den Eingabewert M bzw. Blöcke daraus, d.h. pro Aufruf der Kompressionsfunktion den Block K, auszuspähen, entspricht dies im Zusammenhang mit SHACAL-1 dem Ausspähen des geheimen Schlüssels K. In beiden Fällen ist es möglich, dass einem Angreifer der Vorwert P ebenfalls nicht bekannt ist.

Ein Verfahren zum Prüfen einer Implementation der Hashfunktion auf dem Datenträger 10 auf Sicherheit gegenüber einem Fehlerangriff umfasst im Grunde die mit Bezug auf Fig. 3 gezeigten Schritte:

In Schritt S0 wird die Hashfunktion aufgerufen. Der Eingabewert K muss dabei nicht bekannt sein. In Schritt S1 wird die Berechung des Hashwerts gestört. Dies geschieht in der Regel durch externe Einwirkung auf den Datenträger 10, während dieser mit der Berechnung des Hashwerts beschäftigt ist. In Schritt S2 wird die Ausgabe des Datenträgers 10 analysiert. Diese besteht in der Regel in einem gegebenenfalls gestörten Hashwert. Abhängig von dieser Ausgabe wird in Schritt S3 entschieden, ob der Datenträger 10 den Angriff erkannt hat. Hat der Datenträger 10 den Angriff (noch) nicht erkannt, oder kann dies anhand der Ausgabe noch nicht zweifelsfrei festgestellt werden, so kann das Prüfverfahren die Schritte S0 bis S3 wiederholen. Die Störung der Berechnung des Hashwerts kann dabei jeweils eine andere sein oder aber die vorhergehende Störung mehrfach identisch wiederholen. Auf diese Weise kann, wie nachstehend detailliert beschrieben, Schritt für Schritt ein Fehlerangriff auf die kryptographische Hashfunktion simuliert werden.

Das Erkennen einer Störung erfolgt in dem Datenträger 10 mittels einer Fehlerangriffserkennungseinrichtung 54. Diese ist eingerichtet, Inkonsistenzen in der redundanten Berechnung, welche im Rahmen der Berechnung der Hashfunktion durchgeführt werden, zu erkennen. Die redundanten Berechnungen sind Teil eines Verfahrens zum Schützen der Implementation der Hashfunktion gegen Fehlerangriffe. Eine redundante Berechnung beinhaltet insbesondere, dass datenträgerintern vorgegebene Anteile der Berechnung des Hashwerts mehrfach durchgeführt werden. Dies kann zeitlich nacheinander oder parallel geschehen. Bevorzugt ist eine parallele Berechnung bestimmter Teilergebnisse mittels getrennter Hardware. Im Zusammenhang mit diesen redundanten Berechnungen werden insbesondere die jeweiligen Eingabedaten und Ausgabedaten der Berechnungen miteinander verglichen. Weichen diese voneinander ab, deutet dies darauf hin, dass bereits in einem früheren Berechnungsschritt bzw. während der mehrfach ausgeführten Berechnung eine Störung stattgefunden hat. Ebenso können Prüfsummen vorgesehen sein, welche Zwischenergebnisse prüfen und gegebenenfalls Störungen anzeigen können. Solche Inkonsistenzen, d.h. gestörte Prüfsummen, voneinander abweichende Eingabe- oder Ausgabedaten und dergleichen, werden von der Fehlerangriffserkennungseinrichtung 54 erkannt.

Der Datenträger 10 passt daraufhin seine Ausgabe an die gestörte Berechnung derart an, dass ein Ableiten von geheimen Eingabedaten auf Basis der Ausgabe nicht möglich ist. Dies geschieht unter Kontrolle der Fehlerangriffserkennungseinrichtung 54. Dazu kann die Ausgabe beispielsweise vollständig entfallen. Alternativ kann der Datenträger 10 datenträgerintern gestörte Ausgabedaten erzeugen und ausgeben, welche nicht auf der Störung durch den Angriff basieren. Auch abhängig von solchen Daten können keine geheimen Ausgabedaten abgeleitet werden. Alternativ kann die Fehlerangriffserkennungseinrichtung 54 den Fehlerzähler 56 betätigen. Dieser ist eingerichtet, Angriffe auf den Datenträger 10 bzw. die kryptographische Funktion auf dem Datenträger 10 festzuhalten. Es kann vorgesehen sein, dass die Fehlerangriffserkennungseinrichtung 54 den Datenträger 10 oder zumindest die Kryptographieeinrichtung 54 sperrt, wenn der Fehlerzähler einen vorgegebenen Maximalwert überschreitet. Der Datenträger 10 kann dann auch vollständig deaktiviert werden. Ein Sperren oder Deaktivieren des Datenträgers 10 kann durch die Fehlerangriffserkennungseinrichtung 54 auch unabhängig von einem Fehlerzähler veranlasst oder durchgeführt werden, sobald ein Angriff erkannt worden ist.

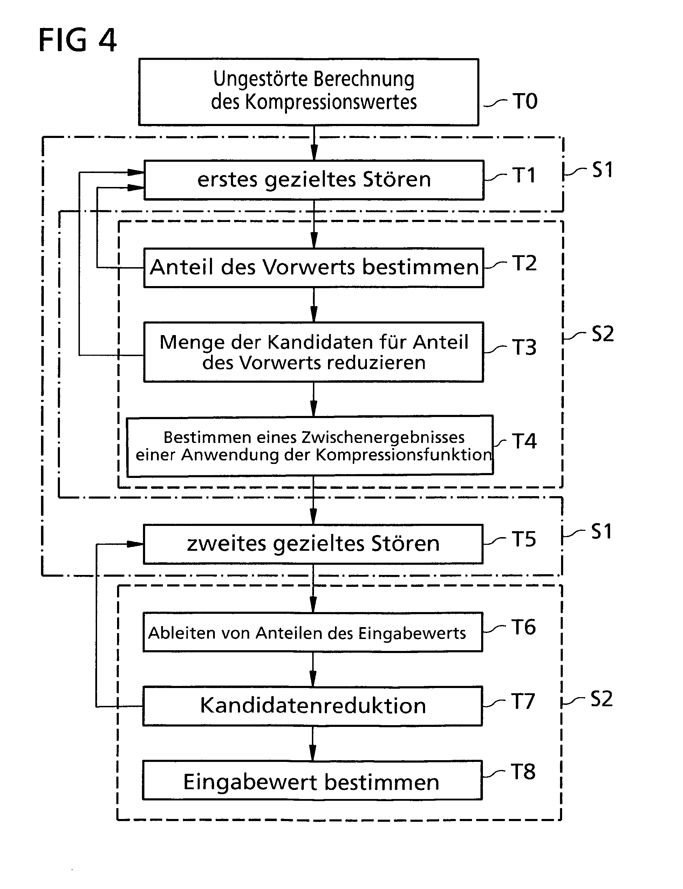

Im Folgenden wird mit Bezug auf die konkrete Hashfunktion SHA-1 eine bevorzugte Ausführungsform eines Verfahrens zum Prüfen einer Implementation der Hashfunktion auf dem Datenträger 10 detailliert beschrieben. Diese Ausführungsform folgt dem mit Bezug auf Fig. 3 dargestellten grundlegenden Vorgehen. Einzelne, detaillierte Schritte des Verfahrens sind ergänzend mit Bezug auf Figur 4 genauer dargestellt. Ein Prüfen der Implementierung der kryptographischen Funktion umfasst dabei die Schritte des Störens einer Berechnung der kryptographischen Funktion und des Analysierens der Ausgabe des Datenträgers 10 bei gestörter Berechnung.

Zu Beginn wird, wie in Figur 4 mit Bezug auf Schritt T0 gezeigt, für einen gegebenen Vorwert P=A0 || B0 || C0 || D0 || E0 und einen Eingabewert K der ungestörte Kompressionswert

$$
\begin{aligned}
Y \quad &= \mathrm{HashKomp}(P, K) \\
&= YA || YB || YC || YD || YE \\
&= (A80+A0) || (B80+B0) || (C80+C0) || (D80+D0) || (E80+E0)
\end{aligned}
$$

berechnet. Diese Berechnung wird nicht gestört. Der ungestörte Kompressionswert Y wird nachfolgend verwendet, um im Vergleich zu gestörten Kompressionswerten ein Ableiten von Zwischenergebnissen zu ermöglichen.

Die Schritte des Störens der Berechnung der kryptographischen Hashfunktion und des Analysierens der Ausgabe des Datenträgers bei gestörter Berechnung umfassen allgemein folgende Schritte:

Ein erstes gezieltes Stören der Berechnung der kryptographischen Funktion und ein Bestimmen zumindest eines Anteils des Vorwerts auf Grundlage der Ausgabe des Datenträgers in Reaktion auf das erste gezielte Stören. Diese Schritte sind in Figur 4 als Schritte T1 bzw. T2 dargestellt.

Das erste gezielte Stören (Schritt T1) der Berechnung der Kompressionsfunktion erfolgt derart, dass die kryptographische Funktion mehrfach berechnet wird, wobei bei jeder der Berechnungen ein erster vorgegebener Zwischenwert der Berechnung gezielt gestört wird.

Konkret wird für den Vorwert P und den Eingabewert K mehrfach ein gestörter Kompressionswert berechnet:

$$
\begin{aligned}
Y^* &= Y^*A || Y^*B || Y^*C || Y^*D || Y^*E \\
&= (A^*80+A0) || (B^*80+B0) || (C80+C0) || (D80+D0) || (E80+E0).
\end{aligned}
$$

Die Störung erfolgt dabei dadurch, dass jeweils während des Berechnens eines der gestörten Kompressionswerte $Y^*$ im Rahmen eines ersten gezielten Störens der Berechnung des Kompressionswerts ein Fehler in dem Zwischenwert A79 (vgl. Fig. 2) induziert wird. Hier und im Folgenden sind gestörte Werte im Vergleich zu entsprechenden ungestörten Werten stets zusätzlich mit einem "*" gekennzeichnet.

Diese Vorgehensweise entspricht einer speziellen Ausführungsform des Schritts S1 in Fig. 3. Diese Tatsache ist in Fig. 4 dadurch illustriert, dass sowohl Schritt T1, welcher, wie beschrieben, das erste gezielte Stören darstellt, als auch ein nachstehend beschriebener Schritt T5, welcher ein zweites gezieltes Stören darstellt, in Fig. 4 strichpunktiert zusammengefasst als Schritt S1 (vgl. Fig. 3) bezeichnet sind. Die Schritte T2, T3 und T4 sowie T6, T7 und T8 der Fig. 4 können allgemein unter die Vorgehensweise des Schritts S2 der Fig. 3 subsumiert werden, wie dies in Fig. 4 strichliniert angedeutet und nachfolgend detailliert beschrieben ist.

Der Schritt T2 des Bestimmens des zumindest einen Anteils des Vorwerts auf Grundlage der Ausgabe des Datenträgers in Reaktion auf das erste gezielte Stören umfasst dann folgende Schritte:

Vergleichen der Ausgabe der Mehrzahl der in dem ersten vorgegebenen Zwischenwert gestörten Berechnungen der kryptographischen Funktion mit der Ausgabe der ungestörten Berechnung der kryptographischen Funktion und Ableiten einer Menge von Kandidaten für den zumindest einen vorgegebenen Anteil des Vorwerts aus dem Ergebnis des Vergleichens.

Dies kann konkret dadurch erfolgen, dass jeweils ein Gleichungssystem der folgenden Art aufgestellt wird:

$$(A^*79 \lll 5) - (A79 \lll 5) = Y^*A - YA$$

$$A^*79 - A79 = Y^*B - YB$$

D.h. für jeden der Mehrzahl der gestörten Kompressionswerte $Y^*$ wird ein solches Gleichungssystem erstellt. Die Gültigkeit eines solchen Systems kann der Bildungsvorschrift, welche in Fig. 2 gezeigt ist, entnommen werden.

Aus diesem Gleichungssystem kann zumindest eine Menge von Kandidaten für A79 bestimmt werden, d.h. zumindest eine Anzahl von Bits des Werts A79 kann aus den aufgestellten Gleichungssystemen errechnet werden.

Dies gilt allgemein für ein Gleichungssystem der Art

$$(X^* \lll s) - (X \lll s) = D1$$

$$(X^* \lll t) - (X \lll t) = D2$$

mit unbekanntem Wert $X$, $X^*$ aus $\{0,1\}^{32}$ und bekanntem Wert $D1$, $D2$ aus $\{0,1\}^{32}$ und wobei $s$ und $t$ ungleiche natürliche Zahlen sind. Sind bei festem $X$, entsprechend festem A79, genügend Tupel $D1$, $D2$ bekannt, welche das Gleichungssystem für entsprechende $X^*$, entsprechend gestörtem A79, jeweils erfüllen, so kann daraus zumindest eine bestimmte Anzahl von Bits für $X$ - entsprechend einer Menge von Kandidaten für $X$, bestimmt werden. Je mehr zufällige Tupel $D1$, $D2$ bekannt sind, entsprechend der Anzahl der gestörten Berechnungen des Kompressionswerts, desto weiter kann $X$ eingeschränkt werden.

Aus der Menge der Kandidaten für A79 kann dann eine Menge von Kandidaten für den Anteil B0 des Vorwerts $P$ bestimmt werden. Dies ergibt sich aus der Beziehung B0 = YB - B80 = YB - A79. Der Schritt T2 des Ableitens der Kandidaten für B0 lässt sich als Teil der Analyse der Ausgabe des Datenträgers gemäß Schritt S2 aus Fig. 3 verstehen.

Die vorstehend beschriebenen Schritte T1 und T2 lassen sich nun, wie in Fig. 3 mit Bezug auf die dortigen Schritte S1 und S2 angedeutet und in Fig. 4 explizit gezeigt, dem Prinzip nach wiederholen. Dabei ändert sich mit Bezug auf Schritt S1 in Fig. 3 bzw. Schritt T1 in Fig. 4 lediglich die Stelle, an der die Berechnung des Kompressionswertes im Rahmen des ersten gezielten Störens gestört wird. Statt des Zwischenwerts A79 werden nun die Zwischenwerte A78 und A77 gestört.

Abhängig davon ändert sich mit Bezug auf Schritt S2 in Fig. 3 bzw. Schritt T2 in Fig. 4, für welchen Anteil des Vorwerts zumindest eine Menge von Kandidaten bestimmt wird. Nun werden für die Anteile C0 und D0 Kandidaten bestimmt.

Konkret können die angedeuteten Schritte wie folgt erfolgen: Mehrfach wird jeweils ein gestörter Kompressionswert

$$Y^* = Y^*A \,||\, Y^*B \,||\, Y^*C \,||\, Y^*D \,||\, Y^*E$$

$$= (A^*80+A0) \,||\, (B^*80+B0) \,||\, (C^*80+C0) \,||\, (D80+D0) \,||\, (E80+E0) \text{ dadurch}$$

dadurch berechnet, dass jeweils während des Berechnens eines der gestörten Kompressionswerte $Y^*$ ein Fehler in den Zwischenwert A78 induziert wird. Anschließend wird ein Gleichungssystems

$$(A^*78 \lll 5) - (A78 \lll 5) = Y^*B - YB$$

$$(A^*78 \lll 30) - (A78 \lll 30) = Y^*C - YC$$

für jeden der gestörten Kompressionswerte Y* aufgestellt. Aus diesen Gleichungssystemen kann eine Menge von Kandidaten für A78 abgeleitet werden. Abhängig von dieser Kandidatenmenge für A78 wird schließlich eine Menge von Kandidaten für den Anteil C0 des Vorwerts abgeleitet. Dies erfolgt aufgrund der Beziehung C0 = YC - C80 = YC - (A78 <<<< 30).

Mit Bezug auf eine Störung im Zwischenwert A77 schließlich, sind die Gleichungssysteme für die gestörten Kompressionswerte Y* durch

$$(A^*77 \lll 3) - (A77 \lll 3) = Y^*C - YC$$

$$(A^*77 \lll 30) - (A77 \lll 30) = Y^*D - YD$$

gegeben. Die Kandidaten für den Anteil D0 des Vorwerts P werden aus den Kandidaten für A77, welche jeweils aus den Gleichungssystemen abgeleitet worden sind, vermöge der Beziehung

$$D0 = YD - D80 = YD - (A77 \lll 30)$$

bestimmt.

Der Schritt T2 des Bestimmens des zumindest einen Anteils des Vorwerts - also wie beschrieben der Werte B0, C0 und D0 - auf Grundlage der Ausgabe des Datenträgers 10 in Reaktion auf das erste gezielte Stören - d.h. die Störung in den Zwischenwerten A79, A78 und A77 - umfasst weiterhin folgende Schritte: Aufstellen eines weiteren Gleichungssystems auf Basis von Werten, welche sich aus der ungestörten Berechnung der kryptographischen Funktion und der Mehrzahl der gezielt gestörten Berechnungen der kryptographischen Funktion ergeben. Die Menge der Kandidaten für den zumindest einen vorgegebenen Anteil des Vorwerts wird dann reduziert, indem solche Kandidaten verworfen werden, welche das genannte Gleichungssystem nicht erfüllen. Das Reduzieren der Menge der Kandidaten ist mit Bezug auf Fig. 4 als Schritt T3 dargestellt. Diese Schritte sind gemäß dem allgemeinen Schema aus Fig. 3 immer noch dem Schritt S2 zuzurechnen.

Mit Bezug auf die Anteile B0 und C0 wird das folgende Gleichungssystem aufgestellt:

$$(x \text{ XOR } \delta) - x = \Delta,$$

wobei

$$x = B79 \text{ XOR } C79 \text{ XOR } D79;$$

$$\delta = B^*79 \text{ XOR } B79$$
$$= ((Y^*C - C0) \lll 2) \text{ XOR } ((YC - C0) \lll 2);$$

und

$$\Delta = (Y^*A - YA) - ((A^*79 \lll 5) - (A79 \lll 5)$$
$$= (Y^*A - YA) - (((Y^*B - B0) \lll 5) - ((YB - B0) \lll 5))).$$

In den oben angegebenen Ausdrücken $\delta$ und $\Delta$ sind alle Größen bekannt, bis auf die nur teilweise bestimmten Anteile B0 und C0 des Vorwerts P. Es werden nun für B0 und C0 sämtliche der in den vorhergehenden Schritten T1 und T2 bestimmten Kandidaten geprüft. Solche Kandidaten, für die das Gleichungssystem keine Lösung ergibt, werden verworfen.

Auf Basis eines nicht verworfenen Kandidaten für den Anteil C0 des Vorwerts wird jeweils eine Lösung des angegebenen Gleichungssystems berechnet.

Aus einer solchen Lösung schließlich wird ein Wert

$$BCD79 := B79 \text{ XOR } C79 \text{ XOR } D79$$

abgeleitet.

In analoger Weise kann für die Anteile C0 und D0 des Vorwerts P vorgegangen werden. Dabei wird das Gleichungssystem

$$(x' \text{ XOR } \delta') - x' = \Delta',$$

aufgestellt,
wobei

$$x' = B78 \text{ XOR } C78 \text{ XOR } D78;$$

$$\delta' = B{*}78 \text{ XOR } B78$$
$$= ((Y{*}D - D0) \lll 2) \text{ XOR } ((YD - D0) \lll 2);$$

und

$$\Delta' = (Y{*}B - YB) - ((A{*}78 \lll 5) - (A78 \lll 5)$$
$$= (Y{*}B - YB) - ((( Y{*}C - C0) \lll 7) - ((YC - C0) \lll 7)))$$

gilt.

Analog zu vorstehend Beschriebenem werden nun für D0 sämtliche der zuvor bestimmten Kandidaten geprüft. Dabei kann vorteilhafterweise bereits die zuvor reduzierte Kandidatenmenge für den Anteil C0 des Vorwerts herangezogen werden. Solche Kandidaten, für die das Gleichungssystem keine Lösung ergibt, werden verworfen. Auf Basis eines nicht verworfenen Kandidaten für den Anteil D0 des Vorwerts wird jeweils eine Lösung des angegebenen Gleichungssystems berechnet. Aus einer solchen Lösung, wird schließlich ein Wert BCD78 : = B78 XOR C78 XOR D78 abgeleitet.

In Fig. 4 ist angedeutet, dass auch nach Ausführung des Schritts T3 die Schritte T1 und T2 erneut durchgeführt werden können. Dies ist beispielsweise dann möglich, wenn ein erstes gezieltes Stören der Berechnung des Kompressionswerts im Zwischenwert A77 (gemäß Schritt T1) und ein Ableiten von Kandidaten des Anteils D0 des Vorwerts (gemäß Schritt T2) erst dann durchgeführt werden, wenn die Menge der Kandidaten für den Anteil C0 des Vorwerts bereits gemäß Schritt T3 reduziert worden ist. Prinzipiell kann die Berechnung der Mehrzahl der sowohl in A79 als auch in A78 und A77 gezielt gestörten Kompressionswerte aber auch bereits sämtlich in Schritt T1 durchgeführt werden, so dass Schritt T2 und Schritt T3 ausgeführt werden können, ohne dass nochmals Schritt T1 bemüht werden müsste.

Auf Basis der eingeschränkten Kandidatenmenge für die Vorwertanteile B0, C0 und D0 sowie der Werte BCD78 und BCD79 wird jeweils eine Menge von Kandidaten für die Werte E0 und E79 gemäß den folgenden Beziehungen bestimmt:

$$E0 = YE - E80$$

$$= YE - D79$$

$$= YE - (BCD79 \ XOR \ (((YC - C0) \lll 2) \ XOR \ (YD - D0)));$$

und

$$E79 = BCD78 \ XOR \ B78 \ XOR \ C78$$

$$= (BCD78 \ XOR \ (((YD - D0) \lll 2) \ XOR \ (YE - E0))).$$

Je kleiner die Kandidatenmenge für die Ausgangswerte B0, C0, D0, BCD78 und BCD79, desto kleiner die resultierenden Kandidatenmengen für E0 und E79. Auch dieser Schritt kann gemäß Fig. 3 noch unter Schritt S2 als Analyse von Ausgabedaten verstanden werden.

Aus allgemeiner Sicht umfassen die Schritte des Störens der Berechnung der kryptographischen Funktion und des Analysierens der Ausgabe des Datenträgers bei gestörter Berechnung nun den folgenden Schritt T4 (vgl. Fig. 4) des Bestimmens eines Zwischen-Ergebnisses einer der Anwendungen der Kompressionsfunktion aus dem zumindest einen bestimmten Anteil des Vorwerts.

Bisher ist es gelungen, Anteile B0, C0, D0 und E0 des Vorwerts im Wesentlichen vollständig zu bestimmen oder für jeden dieser Werte zumindest eine nicht allzu große Kandidatenmenge festzulegen. Abhängig von diesen Werten soll nun gemäß der konkreten Ausführungsform eine Kandidatenmenge für den 79-ten Status A79 || B79 || C79 || D79 || E79 abgeleitet werden.

Der Schritt T4 des Bestimmens eines Zwischen-Ergebnisses einer der Anwendungen der Kompressionsfunktion aus dem zumindest einen bestimmten Anteil des Vorwerts umfasst seinerseits folgende Schritte: Es wird eine Menge von Kandidaten für ein Zwischen-Ergebnis einer Anwendung der Kompressionsfunktion unter Verwendung nicht verworfener Kandidaten für den zumindest einen vorgegebenen Anteil des Vorwerts abgeleitet. Anschließend wird das Zwischen-Ergebnis durch Auswahl eines Kandidaten aus der abgeleiteten Menge von Kandidaten bestimmt. Diese Teilschritte des Schritts T4 der Fig. 4 sind immer noch Teil der Analyse der Ausgabe des Datenträgers gemäß Schritt S2 aus Fig. 3.

Konkret kann dies wie folgt geschehen:

Für jeweils eine Kombination aus einem nicht verworfenen Kandidaten für B0 und E79 sowie dem Wert BCD79 wird ein Wert

$$KA := K79 + A0$$

$$= YA - ((YB - B0) \lll 5) - BCD79 - E79 - RC79$$

berechnet. D.h. auch für KA ergibt sich eine Menge von Kandidaten.

In Kenntnis der Werte KA, B0, C0, D0 und E0 bzw. jeweils einer Menge von Kandidaten für jeden dieser Werte, kann zumindest eine Menge von Kandidaten für das Ergebnis der 79-ten Anwendung der Rundenfunktion, den Status A79 || B79 || C79 || D79 || E79, berechnet werden.

Damit wäre ein Angreifer im Grunde in einer Situation, wie sie zu Beginn eines Fehlerangriffs auf SHACAL-1 vorliegt. Ein solcher Fehlerangriff ist bekannt und in dem Artikel von R. Li, C. Li, C. Gong, "Differential Fault Analysis on SHACAL-1", FDTC 2009, beschrieben. Nachstehend wird mit Bezug auf die Schritte T5 bis T8 der Fig. 4 beschrieben, wie das vorliegende Prüfverfahren angepasst wird, um zu prüfen, ob es einem Angreifer, der bis zu dieser Stelle vorgedrungen ist, möglich wäre, auch noch den Eingabewert zu bestimmen. Diese Schritte T5 bis T8 - wie auch die vorstehend beschriebenen Schritte - müssen im Rahmen der Prüfung nur dann ausgeführt werden, wenn der Datenträger (vgl. Schritt S3 aus Fig. 3) den Angriff auf die Berechnung der Hashfunktion noch nicht erkannt hat oder anhand der Ausgabedaten noch nicht erkennbar ist, ob der Datenträger den Angriff erkannt hat und seinerseits gestörte Daten zur Vereitelung des Angriffs ausgibt.

Die generellen, mit Bezug auf Fig. 3 gezeigten Schritte des Störens der Berechnung der kryptographischen Funktion und des Analysierens der Ausgabe des Datenträgers bei gestörter Berechnung umfassen an dieser Stelle ein zweites gezieltes Stören der Berechnung der kryptographischen Funktion. Dieses zweite gezielte Stören ist in Fig. 4 konkret durch den Schritt T5 dargestellt. D.h. die Schleife der Fig. 3 des Störens (Schritt S1) und Analysierens (Schritt S2) wird gemäß Fig. 4 in den Schritten T5 (Stören) sowie T6 bis T8 (Analysieren) wiederholt. Weiterhin wird anschließend an Schritt T5 der Eingabewert aus dem bestimmten Ergebnis der Kompressionsfunktion in Verbindung mit der Ausgabe des Datenträgers in Reaktion auf das zweite gezielte Stören bestimmt (Schritte T6 bis T8).

Das zweite gezielte Stören der Berechnung der kryptographischen Funktion (Schritt T5) umfasst dabei die folgenden Schritte: Mehrfaches Berechnen der kryptographischen Funktion, wobei bei jeder der Berechnungen ein zweiter vorgegebener Zwischenwert der Berechnung gezielt gestört wird.

Der Schritt T8 des Bestimmens des Eingabewerts aus dem bestimmten Zwischen-Ergebnis der Kompressionsfunktion in Verbindung mit der Ausgabe des Datenträgers in Reaktion auf das zweite gezielte Stören umfasst schließlich folgende Schritte: Ein Ableiten von Anteilen des Eingabewertes (Schritt T6) unter Verwendung der Ausgabe der Mehrzahl der in dem zweiten vorgegebenen Zwischenwert gestörten Berechnungen der kryptographischen Funktion durch Vergleich mit der Ausgabe einer ungestörten Berechnung der kryptographischen Funktion. In einem abschließenden Schritt, welcher ebenfalls Schritt T8 zugeordnet werden kann, wird der Eingabewert aus den abgeleiteten Anteilen des Eingabewerts bestimmt.

Im Unterschied zu dem mit Bezug auf SHACAL-1 beschriebenen Fehlerangriff erfolgt hier die weitere Prüfung in Kenntnis des 79-ten Status anstatt dem 80-Status, welcher gemäß SHACAL-1 als Ausgabe vorliegt. Weiterhin unterschiedlich ist, dass nicht, wie im Zusammenhang mit SHACAL-1 beschrieben, in dieser Phase eine Mehrzahl gestörter Kompressionswerte berechnet wird, wobei die Störungen jeweils in den acht Zwischenwerten B77, B75, B73, B71, B69, B67, B65, B63 erfolgt. Vorliegend erfolgt die zweite gezielte Störung gemäß Schritt T5 in den neun Zwischenwerten B76, B74, B72, B70, B68, B66, B64, B62, B60. Schließlich werden vorliegend 17 Rundenschlüssel K79, K78, ..., K64 anstatt, wie im Zusammenhang mit dem Fehlerangriff auf SHACAL-1 beschrieben, 16 Rundenschlüssel K78, K77, ..., K62 bestimmt. Gemäß dem vorliegenden Verfahren muss jede dieser Berechnungen für alle noch nicht verworfenen Kandidaten für die Werte KA, B0, C0, D0 und E0 ausgeführt werden. Beim Auftreten von Ungereimtheiten, im Rahmen dieser Berechnungen, beispielsweise unlösbaren Gleichungssystemen und dergleichen, können in der Regel weitere Kandidaten verworfen werden. Dies ist in Fig. 4 mit Bezug auf Schritt T7 angedeutet.

Wie bereits mit Bezug auf die Schritte T1 bis T3 beschrieben, kann auch mit Bezug auf die Schritte T5 bis T7 die Ausführungsreihenfolge variieren. D.h. es können zuerst sämtliche gestörten Berechnungen gemäß Schritt T5 durchgeführt werden, bevor eine Analyse der daraus erhaltenen Daten gemäß den Schritten T6 und T7 erfolgt. Es ist aber auch möglich, wie in Fig. 4 angedeutet, weitere gestörte Berechnungen (Schritt T5) anzustellen, nachdem bereits eine Analyse zuvor berechneter Daten (Schritte T6, T7) stattgefunden hat, beispielsweise dann, wenn ein eindeutiger Eingabewert noch nicht abgeleitet werden konnte (Schritt T8).

Ein Datenträger, für welchen das beschriebene Prüfverfahren bis zu diesem Punkt vordringt und den Eingabewert zu dem Kompressionswert bestimmen kann, ist als unsicher gegenüber dem Fehlerangriff erkannt. Die Implementierung der Kompressionsfunktion auf dem Datenträger sollte entsprechend angepasst werden. Die Verfahrensschritte, welche vorstehend mit Bezug auf das Verfahren zum Schützen einer entsprechenden Implementation beschrieben sind, sind dazu sämtlich geeignet. Auf diese Weise kann eine Implementation der Kompressionsfunktion auch gegenüber einem hier neu vorgestellten Fehlerangriff, welcher im Rahmen des Prüfverfahrens schrittweise durchgeführt worden ist, gesichert werden.

Wie bereits erwähnt, kann eine einfache kryptographische Kompressionsfunktion als Grundfunktion für zusammengesetzte kryptographische Funktionen verwendet werden, z.B. für so genannte "keyed hashfunctions". Wie im Folgenden dargestellt, kann das vorstehend beschriebene Verfahren auch verwendet werden, um eine solche zusammengesetzte Funktion auf Sicherheit gegenüber einem Fehlerangriff zu prüfen.

Unter einer "keyed hashfunction" wird eine Hashfunktion verstanden, bei deren Berechnung ein Geheimdatum mit eingeht. Eine wichtige Klasse der "keyed hashfunctions" bilden die "Message Authentication Codes" (MACs). Für eine einfache Hashfunktion Hash, wie z.B. SHA-1, kann eine Funktion KHash wie folgt definiert werden: KHash(K, M) := Hash(K || M). Eine solche Funktion wird beispielsweise bei einem hashbasierten Schlüsselableitungsverfahren verwendet. K ist dabei ein geheimer Schlüssel, M ein Eingabewert. In dem Fall, dass K die Länge eines Datenblocks hat - im Falle von SHA-1 also 512 Bits - ist die Funktion KHash äquivalent dazu, dass ein Hashwert mittels Hash gebildet wird, wobei anstatt eines gewöhnlichen Vorwerts IV der spezielle Vorwert IV_K := HashKomp(IV, K) verwendet wird.

Ein klassischer Vertreter der "keyed hashfunctions" ist die Funktion HMAC. Diese ist wie folgt definiert:

$$HMAC(K, M) := Hash(K \text{ XOR } opad \,||\, Hash(K \text{ XOR } ipad \,||\, M)).$$

Dabei bezeichnet wieder K einen geheimen Schlüssel und M einen Eingabewert. Die Zeichenkette opad und ipad sind gegeben und dienen dem geeigneten Auffüllen (Padding). Die abgeleiteten Werte

IV_out := HashKomp(IV, K XOR opad) und

IV_in := HashKomp(IV, K XOR ipad)

werden auch als "prehashed keys" bezeichnet.

Weiterhin sei

Data_out := HashKomp(IV_in, M)

der Wert, der sich aus der inneren Hashfunktion in der Definition der Funktion HMAC ergibt. Dann lässt sich die Funktion HMAC wie folgt darstellen: HMAC = HashKomp(IV_out, Data_out).

Auf diese Weise wird sichtbar, dass das vorstehend beschriebene Prüfverfahren auch geeignet ist, die Funktion HMAC - und ähnlich aufgebaute, komplexere Hashfunktionen - auf Sicherheit gegenüber einem Fehlerangriff zu prüfen. Dies betrifft insbesondere solche Funktionen, die einen Bestandteil haben, welcher die Form OUT := HashKomp(IV_K, M) besitzen, wobei OUT dem Angreifer zur Verfügung steht, IV_K und M aber unbekannt sind. Mit Bezug auf die Funktion HMAC sind beide Eingabeworte, IV_out entspricht einem Vorwert P, Data_out einem Eingabewert, unbekannt. Ziel eines Angreifers ist es, durch Störung der Berechnung der Funktion HMAC an zumindest große Anteile dieser Daten zu gelangen.

Es bleibt zu bemerken, dass der Eingabewert M der Funktion HMAC derzeit noch zusätzlich aufgrund folgender Tatsache gesichert ist. Um den ursprünglichen Eingabewert M zu erspähen, müsste es dem Angreifer weiterhin gelingen, den Wert IV_in zu bestimmen. Dies wäre erneut mit einem beschriebenen Angriff aus der Beziehung Data_out = HashKomp(IV_in, M) möglich. Hier allerdings ergibt sich die Schwierigkeit, dass der Wert Data_out lediglich ein interner Wert der Berechnung der Funktion HMAC ist und dem Angreifer insofern als gestörte Ausgabedaten Data_out* nicht zur Verfügung steht.

**Patentansprüche**

1. Verfahren zum Prüfen einer Implementierung einer kryptographischen Funktion auf einem portablen Datenträger (10) auf Sicherheit gegenüber einem Fehlerangriff, wobei im Rahmen der Berechnung der kryptographischen Funktion ausgehend von einem Vorwert (A0, B0, C0, D0, E0) und einem Eingabewert durch Anwenden einer Kompressionsfunktion ein Kompressionswert (YA, YB, YC, YD, YE) berechnet wird und wobei ein Prüfen der Implementierung der kryptographischen Funktion die Schritte des Störens (S1; T1; T5) einer Berechnung der kryptographischen Funktion und des Analysierens (S2; T2; T3; T4; T6; T7; T8) der Ausgabe des Datenträgers (10) bei gestörter Berechnung umfasst, **dadurch gekennzeichnet, dass** die kryptographische Funktion ein abschließendes Verknüpfen des Vorwerts (A0, B0, C0, D0, E0) mit dem Ergebnis (A80, B80, C80, D80, E80) der Anwendung der verkürzten Kompressionsfunktion umfasst und dass der Fehlerangriff auf die Kompressionsfunktion durchgeführt wird.

2. Verfahren nach Anspruch 1, **dadurch gekennzeichnet, dass** die Schritte des Störens (S1; T1) der Berechnung der kryptographischen Funktion und des Analysierens (S2; T2) der Ausgabe des Datenträgers (10) bei gestörter Berechnung die folgenden Schritte umfassen:

   - Erstes gezieltes Stören (T1) der Berechnung der kryptographischen Funktion;
   - Bestimmen (T2) zumindest eines Anteils des Vorwerts (A0, B0, C0, D0, E0) auf Grundlage der Ausgabe des Datenträgers in Reaktion auf das erste gezielte Stören.

3. Verfahren nach Anspruch 2, **dadurch gekennzeichnet, dass** die Schritte des Störens (S1; T1) der Berechnung der kryptographischen Funktion und des Analysierens (S2; T4) der Ausgabe des Datenträgers (10) bei gestörter Berechnung den folgenden Schritt umfassen:

   - Bestimmen (T4) eines Zwischen-Ergebnisses einer der Anwendungen der Kompressionsfunktion aus dem zumindest einen bestimmten Anteil des Vorwerts (A0, B0, C0, D0, E0).

4. Verfahren nach Anspruch 3, **dadurch gekennzeichnet, dass** die Schritte des Störens (S1; T5) der Berechnung der kryptographischen Funktion und des Analysierens (S2; T8) der Ausgabe des Datenträgers (10) bei gestörter Berechnung die folgenden Schritte umfassen:

   - Zweites gezieltes Stören (T5) der Berechnung der kryptographischen Funktion;
   - Bestimmen (T8) des Eingabewerts aus dem bestimmten Zwischen-Ergebnis der Kompressionsfunktion in Verbindung mit der Ausgabe des Datenträgers in Reaktion auf das zweite gezielte Stören.

5. Verfahren nach einem der Ansprüche 2 bis 4, umfassend den Schritt des ungestörten Berechnens (T0) der kryptographischen Funktion, **dadurch gekennzeichnet, dass** das erste gezielte Stören (T1) der Berechnung der kryptographischen Funktion derart erfolgt, dass die kryptographische Funktion mehrfach berechnet wird, wobei bei jeder der Berechnungen ein erster vorgegebener Zwischenwert (A79; A78; A77) der Berechnung gezielt gestört wird.

6. Verfahren nach Anspruch 5, **dadurch gekennzeichnet, dass** der Schritt (T2) des Bestimmens des zumindest einen Anteils des Vorwerts (A0, B0, C0, D0, E0) auf Grundlage der Ausgabe des Datenträgers (10) in Reaktion auf das erste gezielte Stören folgende Schritte umfasst:

   - Vergleichen der Ausgabe der Mehrzahl der in dem ersten vorgegebenen Zwischenwert (A79; A78; A77) gestörten Berechnungen der kryptographischen Funktion mit der Ausgabe der ungestörten Berechnung der kryptographischen Funktion;
   - Ableiten einer Menge von Kandidaten für den zumindest einen vorgegebenen Anteil (B0; C0; D0) des Vorwerts (A0, B0, C0, D0, E0) aus dem Ergebnis des Vergleichens.

7. Verfahren nach Anspruch 6, **dadurch gekennzeichnet, dass** der Schritt (T2) des Bestimmens des zumindest einen Anteils (B0; C0; D0) des Vorwerts (A0, B0, C0, D0, E0) auf Grundlage der Ausgabe des Datenträgers (10) in Reaktion auf das erste gezielte Stören weiterhin folgende Schritte umfasst:

   - Aufstellen eines Gleichungssystems auf Basis von Werten, welche sich aus der ungestörten Berechnung der kryptographischen Funktion und der Mehrzahl der gezielt gestörten Berechnungen der kryptographischen Funktion ergeben;
   - Reduzieren (T3) der Menge der Kandidaten für den zumindest einen vorgegebenen Anteil (B0; C0; D0) des Vorwerts (A0, B0, C0, D0, E0), indem solche Kandidaten verworfen werden, welche das Gleichungssystem nicht erfüllen.

8. Verfahren nach einem der Ansprüche 3 bis 7, **dadurch gekennzeichnet, dass** der Schritt (T4) des Bestimmens eines Zwischen-Ergebnisses einer der Anwendungen der Kompressionsfunktion aus dem zumindest einen bestimmten Anteil (B0; C0; D0) des Vorwerts (A0, B0, C0, D0, E0) folgende Schritte umfasst:

   - Ableiten einer Menge von Kandidaten für ein Zwischen-Ergebnis (A79, B79, C79, D79, E79) einer Anwendung der Kompressionsfunktion unter Verwendung nicht verworfener Kandidaten für den zumindest einen vorgegebenen Anteil (B0; C0; D0) des Vorwerts (A0, B0, C0, D0, E0);
   - Bestimmen eines Zwischen-Ergebnisses (A79, B79, C79, D79, E79) einer Anwendung der Kompressionsfunktion durch Auswahl eines Kandidaten aus der abgeleiteten Menge von Kandidaten.

9. Verfahren nach einem der Ansprüche 4 bis 7 und nach Anspruch 8, **dadurch gekennzeichnet, dass** das zweite gezielte Stören (T5) der Berechnung der kryptographischen Funktion folgende Schritte umfasst:

   - Mehrfaches Berechnen der kryptographischen Funktion, wobei bei jeder der Berechnungen ein zweiter vorgegebener Zwischenwert (B76; B74; B72; B70; B68; B66; B64; B62; B60) der Berechnung gezielt gestört wird.

10. Verfahren nach Anspruch 9, **dadurch gekennzeichnet, dass** der Schritt des Bestimmens (T8) des Eingabewerts aus dem bestimmten Zwischen-Ergebnis der Kompressionsfunktion in Verbindung mit der Ausgabe des Datenträgers (10) in Reaktion auf das zweite gezielte Stören folgende Schritte umfasst:

    - Ableiten (T6) von Anteilen des Eingabewertes unter Verwendung der Ausgabe der Mehrzahl der in dem zweiten vorgegebenen Zwischenwert gestörten Berechnungen der kryptographischen Funktion durch Vergleich mit der Ausgabe einer ungestörten Berechnung der kryptographischen Funktion;
    - Bestimmen (T8) des Eingabewerts aus den abgeleiteten Anteilen des Eingabewerts.

11. Verfahren zum Schützen einer Implementierung einer kryptographischen Funktion auf einem portablen Datenträger (10) gegenüber einem Fehlerangriff, wobei im Rahmen der Berechnung der kryptographischen Funktion ausgehend von einem Vorwert (A0, B0, C0, D0, E0) und einem Eingabewert durch Anwenden einer Kompressionsfunktion ein Kompressionswert (YA, YB, YC, YD, YE) berechnet wird und wobei vorgegebene Anteile der Berechnung des Kompressionswertes redundant durchgeführt werden, **dadurch gekennzeichnet, dass**

**18**

die kryptographische Funktion ein abschließendes Verknüpfen des Vorwerts (A0, B0, C0, D0, E0) mit dem Ergebnis (A80, B80, C80, D80, E80) der Anwendung der verkürzten Kompressionsfunktion umfasst und dass der Fehlerangriff auf die Kompressionsfunktion durchgeführt wird.

12. Verfahren nach Anspruch 11, **dadurch gekennzeichnet, dass** vorgegebene Anteile der Berechnung des Kompressionswerts dadurch redundant durchgeführt werden, dass die Anteile der Berechnung datenträgerintern mehrfach durchgeführt werden, insbesondere dass die Anteile der Berechnung datenträgerintern mittels verschiedener Hardwarekomponenten durchgeführt werden.

13. Verfahren nach Anspruch 11 oder 12, **dadurch gekennzeichnet, dass** Eingabedaten zur Berechnung der Anteile für die mehrfachen Berechnungen miteinander verglichen werden und/oder Ausgabedaten der mehrfachen Berechnungen der Anteile miteinander verglichen werden.

14. Verfahren nach Anspruch 11 bis 13, **dadurch gekennzeichnet, dass** bei der Berechnung des Kompressionswerts eine Datenredundanz verwendet wird, insbesondere in der Form von Prüfsummen für Zwischenergebnisse der Berechnung der Kompressionsfunktion.

15. Verfahren nach einem der Ansprüche 11 bis 14, **dadurch gekennzeichnet, dass** bei Erkennen von Inkonsistenzen im Zusammenhang mit der redundanten Berechnung der vorgegebenen Anteile der Kompressionsfunktion Sicherungsmaßnahmen im Datenträger (10) vorgenommen werden, insbesondere dass als Sicherungsmaßnahme ein Fehlerzähler (56) im Datenträger (10) erhöht wird und/oder eine Ausgabe des Datenträgers (10) unterdrückt oder verfälscht wird und/oder der Datenträger (10) gesperrt wird und/ oder der Datenträger (10) deaktiviert wird.

16. Verfahren nach einem der Ansprüche 1 bis 15, **dadurch gekennzeichnet, dass** als angegriffene Kompressionsfunktion die Kompressionsfunktion von SHA-1 oder SHA-224, SHA-256, SHA-384 oder SHA-512 verwendet wird.

17. Portabler Datenträger (10), umfassend zumindest einen Speicher (40; 50; 60) und Prozessor (30) sowie eine in dem Speicher (50) gespeicherte Kryptographieeinrichtung (52), welche eingerichtet ist, im Rahmen der Berechnung einer kryptographischen Funktion ausgehend von einem Vorwert (A0, B0, C0, D0, E0) und einem Eingabewert durch Anwenden einer Kompressionsfunktion einen Kompressionswert (YA, YB, YC, YD, YE) zu berechnen und dabei vorgegebene Anteile der Berechnung des Kompressionswertes redundant durchzuführen, **dadurch gekennzeichnet, dass** die Kryptographieeinrichtung weiter eingerichtet ist, im Rahmen der Berechnung der kryptographischen Funktion ein abschließendes Verknüpfen des Vorwerts (A0, B0, C0, D0, E0) mit dem Ergebnis (A80, B80, C80, D80, E80) der Anwendung der verkürzten Kompressionsfunktion durchzuführen.

18. Portabler Datenträger (10) nach Anspruch 17, **gekennzeichnet durch** eine Fehlerangriffserkennungseinrichtung (54), welche eingerichtet ist, Inkonsistenzen im Zusammenhang mit der redundanten Berechnung der vorgegebenen Anteile der Kompressionsfunktion zu erkennen und im Falle erkannter Inkonsistenzen Sicherungsmaßnahmen in dem Datenträger (10) vorzunehmen.

FIG 1

# FIG 2

## FIG 3

```
          ┌─────────────────┐
          │   Hashfunktion  │── S0
     ┌───▶│     aufrufen    │
     │    └─────────────────┘
     │             │
     │             ▼
     │    ┌─────────────────┐
     │    │   Berechnung    │── S1
     │    │     stören      │
     │    └─────────────────┘
     │             │
     │             ▼
     │    ┌─────────────────┐
     │    │    Ausgabe      │── S2
     │    │   analysieren   │
     │    └─────────────────┘
     │             │
     │             ▼
     │         ╱───────────╲  ── S3
     │  Nein  ╱   Störung   ╲
     └───────◀    erkannt?   ▶
             ╲             ╱
              ╲───────────╱
                   │ Ja
                   ▼
          ┌─────────────┐
          │    Ende     │
          └─────────────┘
```

# FIG 4

```
┌──────────────────────────────┐
│      Ungestörte Berechnung    │
│     des Kompressionswertes    │ ──T0
└──────────────────────────────┘
                │
┌──────────────────────────────┐
│     erstes gezieltes Stören   │ ──T1    ──S1
└──────────────────────────────┘
                │
┌──────────────────────────────┐
│  Anteil des Vorwerts bestimmen│ ──T2
└──────────────────────────────┘
                │
┌──────────────────────────────┐
│  Menge der Kandidaten für Anteil│ ──T3   ──S2
│   des Vorwerts reduzieren     │
└──────────────────────────────┘
                │
┌──────────────────────────────┐
│  Bestimmen eines Zwischenergebnisses│ ──T4
│ einer Anwendung der Kompressionsfunktion│
└──────────────────────────────┘
                │
┌──────────────────────────────┐
│     zweites gezieltes Stören  │ ──T5    ──S1
└──────────────────────────────┘
                │
┌──────────────────────────────┐
│ Ableiten von Anteilen des Eingabewerts│ ──T6
└──────────────────────────────┘
                │
┌──────────────────────────────┐
│     Kandidatenreduktion       │ ──T7    ──S2
└──────────────────────────────┘
                │
┌──────────────────────────────┐
│     Eingabewert bestimmen     │ ──T8
└──────────────────────────────┘
```

Europäisches
Patentamt

European
Patent Office

Office européen
des brevets

**EUROPÄISCHER RECHERCHENBERICHT**

Nummer der Anmeldung

EP 11 00 9226

| | EINSCHLÄGIGE DOKUMENTE | | | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) | |
| X | HELENA HANDSCHUH ET AL: "SHACAL", FIRST OPEN NESSIE WORKSHOP, 13. November 2000 (2000-11-13), XP55019371, | 1 | INV. H04L9/06 | |
| Y | * das ganze Dokument * ----- | 2-18 | | |
| Y | CHRISTOPHE GIRAUD ED - HANS DOBBERTIN ET AL: "DFA on AES", 31. Juli 2005 (2005-07-31), ADVANCED ENCRYPTION STANDARD Â AES; [LECTURE NOTES IN COMPUTER SCIENCE;;LNCS], SPRINGER-VERLAG, BERLIN/HEIDELBERG, PAGE(S) 27 - 41, XP019011734, ISBN: 978-3-540-26557-3 * Abschnitte 4.1, 4.2, 7 * ----- | 2-18 | | |
| Y,D | BIHAM E ET AL: "DIFFERENTIAL FAULT ANALYSIS OF SECRET KEY CRYPTOSYSTEMS", ADVANCES IN CRYPTOLOGY - CRYPTO '97. SANTA BARBARA, AUG. 17 - 21, 1997; [PROCEEDINGS OF THE ANNUAL INTERNATIONAL CRYPTOLOGY CONFERENCE (CRYPTO)], BERLIN, SPRINGER, DE, Bd. CONF. 17, 17. August 1997 (1997-08-17) , Seiten 513-526, XP001060384, ISBN: 978-3-540-63384-6 * Abschnitt 2 und 5.4 * ----- | 2-18 | RECHERCHIERTE SACHGEBIETE (IPC) H04L | |
| T | TAL G MALKIN ET AL: "A Comparative Cost/Security Analysis of Fault Attack Countermeasures", 1. Januar 2006 (2006-01-01), FAULT DIAGNOSIS AND TOLERANCE IN CRYPTOGRAPHY LECTURE NOTES IN COMPUTER SCIENCE;;LNCS, SPRINGER, BERLIN, DE, PAGE(S) 159 - 172, XP019045559, ISBN: 978-3-540-46250-7 * das ganze Dokument * ----- | 11-15, 17,18 | | |

Der vorliegende Recherchenbericht wurde für alle Patentansprüche erstellt

| Recherchenort | Abschlußdatum der Recherche | Prüfer |
|---|---|---|
| München | 17. Februar 2012 | Manet, Pascal |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 11 00 9226

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HELENA HANDSCHUH ET AL: "SHACAL", FIRST OPEN NESSIE WORKSHOP, 13. November 2000 (2000-11-13), XP55019371, | 1 | INV. H04L9/06 |
| Y | * das ganze Dokument * | 2-18 | |
| Y | CHRISTOPHE GIRAUD ED - HANS DOBBERTIN ET AL: "DFA on AES", 31. Juli 2005 (2005-07-31), ADVANCED ENCRYPTION STANDARD Â AES; [LECTURE NOTES IN COMPUTER SCIENCE;;LNCS], SPRINGER-VERLAG, BERLIN/HEIDELBERG, PAGE(S) 27 - 41, XP019011734, ISBN: 978-3-540-26557-3 * Abschnitte 4.1, 4.2, 7 * | 2-18 | |
| Y,D | BIHAM E ET AL: "DIFFERENTIAL FAULT ANALYSIS OF SECRET KEY CRYPTOSYSTEMS", ADVANCES IN CRYPTOLOGY - CRYPTO '97. SANTA BARBARA, AUG. 17 - 21, 1997; [PROCEEDINGS OF THE ANNUAL INTERNATIONAL CRYPTOLOGY CONFERENCE (CRYPTO)], BERLIN, SPRINGER, DE, Bd. CONF. 17, 17. August 1997 (1997-08-17), Seiten 513-526, XP001060384, ISBN: 978-3-540-63384-6 * Abschnitt 2 und 5.4 * | 2-18 | RECHERCHIERTE SACHGEBIETE (IPC) H04L |
| T | TAL G MALKIN ET AL: "A Comparative Cost/Security Analysis of Fault Attack Countermeasures", 1. Januar 2006 (2006-01-01), FAULT DIAGNOSIS AND TOLERANCE IN CRYPTOGRAPHY LECTURE NOTES IN COMPUTER SCIENCE;;LNCS, SPRINGER, BERLIN, DE, PAGE(S) 159 - 172, XP019045559, ISBN: 978-3-540-46250-7 * das ganze Dokument * | 11-15, 17,18 | |

Der vorliegende Recherchenbericht wurde für alle Patentansprüche erstellt

| Recherchenort | Abschlußdatum der Recherche | Prüfer |
|---|---|---|
| München | 17. Februar 2012 | Manet, Pascal |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

## MANGELNDE EINHEITLICHKEIT
## DER ERFINDUNG
## ERGÄNZUNGSBLATT B

**Nummer der Anmeldung**

EP 11 00 9226

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-10

   Verfahren zum Angreifen einer Implementierung des SHACALs
   ---

2. Ansprüche: 11-18

   Verfahren und Datenträger zum Schüzten einer Implementierung des SHACALs
   ---

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. BIHAM ; A. SHAMIR.** Differential Fault Analysis of Secret Key Cryptosystems. *CRYPTO,* 1997
- **P. DUSART ; G. LETOUREUX ; O. VIVOLO.** Differential Fault Analysis on A.E.S. *ACNS,* 2003
- **R. LI ; C. LI ; C. GONG.** Differential Fault Analysis on SHACAL-1. *FDTC,* 2009

- **D. BONEH ; R. A. DEMILLO ; R. J. LIPTON.** On the Importance of Checking Cryptographic Protocols for Faults. *Eurocrypt,* 1997
- **J. HOCH ; A. SHAMIR.** Fault Analysis of Stream Ciphers. *CHES,* 2004